# FASCICULE DE BREVET EUROPEEN

(11) **EP 3 329 702 B1**
(45) Date de publication et mention de la délivrance du brevet: **28.12.2022**
(21) Numéro de dépôt: 16744360.5
(22) Date de dépôt: 25.07.2016
(51) Int. Cl.: H04W 8/00, H04W 40/24, H04W 84/18, H04W 88/16

(54) **PROCEDE DE DECOUVERTE D'UN NOEUD D'UN RESEAU AD HOC**
VERFAHREN ZUR KNOTENERKENNUNG IN EINEM AD-HOC-NETZWERK
METHOD FOR NODE DISCOVERY IN AN AD-HOC NETWORK

(30) Priorité: 29.07.2015 FR 1501630
(43) Date de publication de la demande: 06.06.2018
(73) Titulaire: AIRBUS DS SAS, 78990 Elancourt (FR)
(72) Inventeur: LABBÉ, Patrick, 92160 Antony (FR); LEGOIX, Olivier, 28410 Goussainville (FR); LE FUR, Cédric, 92320 Chatillon (FR); RADOVANOVIC, Dejan, 94700 Maisons-Alfort (FR)
(74) Mandataire: Cabinet Camus Lebkiri
(86) Numéro de dépôt international: PCT/EP2016/067666
(87) Numéro de publication internationale: WO 2017/017059

(56) Documents cités:
- US-A1- 2003 163 528
- US-A1- 2008 316 997
- Taner Kurtulus: "IMPROVEMENT AND DEVELOPMENT OF HIGH-FREQUENCY WIRELESS TOKEN-RING PROTOCOL", , 15 décembre 2010 (2010-12-15), XP055280625, Extrait de l'Internet: URL:http://citeseerx.ist.psu.edu/viewdoc/d ownload?doi=10.1.1.633.8647&rep=rep1&type= pdf [extrait le 2016-06-15]
- ERGEN M ET AL: "WTRP-Wireless Token Ring Protocol", IEEE TRANSACTIONS ON VEHICULAR TECHNOLOGY, IEEE SERVICE CENTER, PISCATAWAY, NJ, US, vol. 53, no. 6, 22 novembre 2004 (2004-11-22), pages 1863-1881, XP011122477, ISSN: 0018-9545, DOI: 10.1109/TVT.2004.836928
- JOHNSON E E ET AL: "Routing in HF ad-Hoc WANs", MILITARY COMMUNICATIONS CONFERENCE, 2004. MILCOM 2004. 2004 IEEE MONTEREY, CA, USA 31 OCT. - 3 NOV. 2004, PISCATAWAY, NJ, USA,IEEE, vol. 2, 31 octobre 2004 (2004-10-31), pages 1040-1046, XP010825827, DOI: 10.1109/MILCOM.2004.1494990 ISBN: 978-0-7803-8847-5
- JOHNSON E E ET AL: "Token Relay with Optimistic Joining", MILITARY COMMUNICATIONS CONFERENCE, 2005. MILCOM 2005. IEEE ATLANTIC CITY, NJ, USA 17-20 OCT. 2005, PISCATAWAY, NJ, USA,IEEE, PISCATAWAY, NJ, USA, 17 octobre 2005 (2005-10-17), pages 1-7, XP010901496, DOI: 10.1109/MILCOM.2005.1605998 ISBN: 978-0-7803-9393-6
- JOHNSON E E ED - BELKERDID M A ET AL: "HF Radio Mesh Networks", MILCOM 2006 : WASHINGTON, DC, 23 - 25 OCTOBER 2006, PISCATAWAY, NJ : IEEE OPERATIONS CENTER, US, 23 octobre 2006 (2006-10-23), pages 1-5, XP031331734, ISBN: 978-1-4244-0617-3
- YUANGUO BI ET AL: "A multi-channel token ring protocol for QoS provisioning in inter-vehicle communications", IEEE TRANSACTIONS ON WIRELESS COMMUNICATIONS, IEEE SERVICE CENTER, PISCATAWAY, NJ, US, vol. 8, no. 11, 20 novembre 2009 (2009-11-20), pages 5621-5631, XP011284811, ISSN: 1536-1276, DOI: 10.1109/TWC.2009.081651

## Description

### DOMAINE

Le domaine de l'invention concerne les procédés de transmissions d'informations au sein d'un réseau de nœuds mobiles déployé notamment en mer. L'invention concerne plus particulièrement le domaine des protocoles d'échanges de données dans un environnement contraint et évolutif. Enfin, le domaine de l'invention concerne celui des réseaux ad hoc permettant d'établir un réseau IP évolutif à partir d'infrastructures supportant des liaisons radiofréquences entre les nœuds mobiles.

### ETAT DE L'ART

Actuellement, il existe des réseaux ad hoc permettant d'établir des communications et de réserver des ressources pour des nœuds mobiles. Généralement, un tel réseau n'implique pas de station de base pour permettre une configuration dynamique et établir de nouvelles communications avec un nouvel entrant.

Ces besoins sont en partie développés dans les réseaux de télécommunications sans fil et dans les réseaux militaires exigeants une adaptabilité de la topologie du réseau comme, par exemple, dans les réseaux tactiques ou de théâtre.

D'autre part, lorsque les débits des canaux radio sont limités, un protocole de gestion stricte (déterministe) des accès canal x doit être mis en œuvre afin d'optimiser l'emploi du débit disponible. Un protocole acceptant les collisions (gestion statistique) ne peut être déployé que lorsque les débits des canaux sont suffisamment importants pour permettre un surdimensionnement des besoins opérationnels et que les équipements radio sont suffisamment agiles pour écouter le canal immédiatement après une émission. Actuellement, les réseaux ad hoc mobiles s'appuyant sur une gestion stricte des ressources sont limités par les débits offerts pour supporter une topologie réseau de type IP.

Parmi les modes de gestion stricte des ressources de bande passante, une solution permettant de définir un mode de multiplexage appelé TDMA, désignant « Accès multiple à répartition de temps » peut être employée.

Ce protocole de gestion d'accès permet d'organiser les communications entre les différents nœuds pour limiter les interférences entre les différents émetteurs.

En revanche, un protocole radio basé sur un TDMA peut être en contradiction d'intérêts avec une couche réseau de type IP, en particulier lorsque qu'il y a un grand nombre de nœuds et que l'accès à une large bande de données est envisagé, et peut constituer une limitation importante aux échanges de données en termes de latence et de débit. En effet, un réseau IP nécessite la génération de messages d'acquittement entre les différents nœuds et les besoins actuels tendent vers une augmentation des débits de transmission. La solution d'un TDMA pour segmenter les voies d'émission dans le temps ne permet pas le déploiement optimisé d'un tel réseau. De plus la logique TDMA peut entrainer un sous-emploi de la ressource disponible dans la mesure où le temps d'accès réservé pour un nœud peut ne pas être totalement utilisé et le reste ne peut pas être rendue disponible pour un autre nœud.

Une autre difficulté d'un réseau ad hoc de radiocommunications est la limitation des portées radio des nœuds, notamment en mer. Il existe un besoin de permettre des modes de relai, notamment pour élargir la couverture du réseau, mais également pour atteindre de nouveaux nœuds mobiles. Ainsi, dans un tel réseau un nouveau nœud mobile entrant peut communiquer avec un nœud hors de portée radio grâce à un ou à des nœuds intermédiaires permettant de jouer le rôle d'un relai de communication.

La fiabilité d'un tel réseau est particulièrement difficile à assurer car il est nécessaire qu'un nouvel entrant puisse se déclarer sans connaitre la nature du réseau et qu'inversement la topologie du réseau lui soit partagée pour qu'il puisse connaitre les nœuds accessibles.

Par ailleurs, de tels réseaux doivent offrir de grandes capacités de reconfiguration, d'allocation de ressources augmentées pour permettre des communications haut débit et une interopérabilité pour supporter des communications s'appuyant sur différents protocoles de données. Il est particulièrement difficile dans un réseau ad hoc offrant une grande souplesse de reconfiguration de permettre un déploiement total sans opérer ou élire des nœuds pour assurer des rôles de « régulateurs » ou de superviseurs du bon fonctionnement du réseau. Or l'attribution de tels rôles n'est pas dans l'esprit du protocole IP qui laisse une grande autonomie au réseau lui-même.

Enfin, un tel réseau peut être connecté à des réseaux tiers ou des points d'accès offrant des services particuliers. De telles connexions ou services doivent pouvoir être déployés dans le tout le réseau mobile, ce qui impose également la définition de rôle et de priorisation de certains nœuds. Or la définition de rôle et de priorisation dans un réseau ad hoc est particulièrement difficile à mettre en œuvre étant donné que le réseau est sans arrêt possiblement reconfigurable selon les nouveaux entrants et les nouveaux sortants.

Le document « Improvement and développement of high frequency wireless token-ring network» de Taner Kurtulus décrit l'amélioration et le développement d'un protocole token-ring dans le contexte des réseaux sans-fils. Le document « WTRP-Wireless Token Ring Protocol » de Ergen et al décrit un protocole token-ring adapté aux réseaux sans-fil. Le document « Routing in HF ad-hoc WAN » de Johnson et al propose un protocole de routage pour les réseaux sans-fil comprenant des nœuds mobiles. Le document « Token Relay with Optimistic Joining » de Johnson et al aborde l'utilisation de token dans le cadre des réseaux sans-fil. Le document « HF radio Mesh Network » by Johnson et al aborde la mise en place d'un réseau HF de nœuds mobiles.

Il existe un besoin de définir un procédé d'établissement d'un réseau ou d'un sous-réseau entre différents nœuds mobiles de manière dynamique et reposant sur des paramètres offrant une grande capacité d'adaptation et de reconfiguration tout en offrant des canaux physiques pour supporter un réseau IP entre les nœuds mobiles.

### RESUME DE L'INVENTION

L'invention vise à pallier à aux inconvénients précités.

Un objet de l'invention concerne un procédé de découverte d'un réseau entre une pluralité de nœuds mobiles selon la revendication 1.

Un avantage de l'invention est de permettre la création d'un réseau IP ad hoc en minimisant les infrastructures nécessaires à l'établissement d'un tel réseau. Un avantage est de favoriser la création d'un réseau IP de nœuds mobiles, par exemple en mer, de manière dynamique en facilitant l'arrivée de nouveaux entrants et la sortie de nœuds se déconnectant du réseau. Un autre avantage est la définition d'un compromis permettant l'établissement d'un réseau physique par voie radio entre nœuds compatible d'un protocole IP, favorisant le débit de données et minimisant les temps de latences des communications.

Selon un mode de réalisation, une taille maximale de fenêtre de temps est déterminée par un nœud dont la priorité est maximale dans une bulle radio.

Selon un mode de réalisation, une analyse de l'indicateur de priorité permet de transmettre l'identité du nœud prioritaire d'une bulle radio lorsqu'il existe.

Autrement dit, le jeton de découverte et/ ou le jeton de parole comprend/nent l'identité d'un nœud prioritaire de la bulle radio le cas échéant.

Selon un mode de réalisation, un premier nœud ayant déjà découvert au moins un second nœud et ayant déjà généré une première bulle radio dans un premier canal de fréquence et découvrant un troisième nœud détermine en fonction :
- du nombre de nœuds dans la bulle radio et ;
- de la valeur de l'indicateur de priorité des nœuds déjà découverts de ladite bulle radio,
les conditions d'intégration du 3^{ème} nœud parmi lesquelles :
- le troisième nœud intègre la première bulle radio rejoignant les deux autres nœuds, la première bulle radio comprenant trois nœuds dont les communications sont organisées par la transmission d'un jeton de parole entre lesdits trois nœuds ;
- une nouvelle bulle radio est formée entre le troisième nœud et le premier ou second nœud, l'un des premier ou second nœud n'étant alors pas intégré dans la nouvelle bulle radio ainsi formée, la première bulle radio étant terminée ;
- le troisième nœud n'est pas invité à intégrer la première bulle radio.

Selon un mode de réalisation, la découverte s'opère par l'émission d'un jeton d'invitation par le premier nœud auquel le troisième nœud répond favorablement dans une fenêtre de temps imparti.

Selon un mode de réalisation, au-delà d'un nombre de trois nœuds, la découverte d'un quatrième nœud peut entrainer différents scénarios selon la priorité de chaque nœud dont :
- l'intégration du quatrième nœud dans la bulle radio impliquant la sortie d'un des trois nœuds déjà présent dans ladite bulle radio ;
- l'intégration du quatrième nœud dans la bulle radio impliquant la sortie de deux des trois nœuds déjà présent dans ladite bulle radio ;
- le quatrième nœud n'est pas invité à intégrer la bulle radio.

Selon un mode de réalisation, le premier nœud indique qu'il est un nœud relais dans le jeton d'invitation à partir de l'indicateur de mode de transmission.

Selon un mode de réalisation, un nœud relai est configuré pour déterminer si les données reçues d'un second nœud sont soient relayées à un troisième nœud soient traitées par le nœud relai et réciproquement des données émises par le troisième nœud et reçues par le nœud relai. Dans ce cas, on appelle le second nœud et le troisième nœuds des nœuds visibles du nœud relai. On considère dans ce cas que les deux nœuds visibles du nœud relai ne sont pas dans l'horizon radio de l'un et de l'autre,

Selon un mode de réalisation, lorsque le premier nœud détecte un indicateur de priorité maximale du troisième nœud et qu'une nouvelle bulle radio est définie entre le premier et troisième nœud, le second nœud est exclu de ladite bulle radio et la première bulle radio est terminée.

Selon un mode de réalisation, le jeton d'invitation ou le jeton de parole émis par un premier nœud comprend, en outre :
▪ des données de topologie radio comprenant un ensemble d'identités de nœuds déjà découverts par le premier nœud d'une première bulle radio ;
▪ des données de topologie d'un réseau IP connue du premier nœud comprenant :
   o l'ensemble des sous-réseaux IP connus de chaque nœud de la bulle radio ;
   o les adresses IP de chaque nœud connu des nœuds du sous-réseau IP correspondant à la première bulle radio,
   o les adresses MAC des routeurs associés à chaque nœud connu.

Selon un mode de réalisation, au moins un nœud détermine une configuration de transmission, également appelé indicateur d'un mode de transmission, d'un jeton de parole selon la configuration des nœuds découverts imposant l'activation ou la désactivation d'un mode relayé et le cas échéant un choix d'un nœud relai, ladite configuration de transmission étant transmise aux autres nœuds par:
▪ une génération d'un indicateur d'un mode relais dans le jeton d'invitation et/ou le jeton de parole ;
▪ une génération d'une identité du prochain nœud devant recevoir le jeton de parole.

Selon un mode de réalisation, le procédé de découverte comprend :
▪ Un établissement d'une première bulle radio entre trois nœuds, dont au moins un nœud est un nœud relai, et les deux autres nœuds étant des nœuds visibles du nœud relai et n'étant pas dans l'horizon radio de l'un et de l'autre, ledit nœud relai relayant par voie radio le jeton de parole selon un sens pour établir une boucle d'émission du jeton de parole entre les trois nœuds ;
▪ Une réception par un premier nœud visible du nœud relai d'un jeton d'invitation provenant d'un autre nœud de la première bulle radio ;
   Une transmission au nœud relai par le second nœud visible du nœud relai de la nouvelle topologie de la bulle radio comportant :
   o au moins l'identité du premier nœud visible du nœud relai découvert par le second nœud visible du nœud relai et ;
   o un indicateur de mode de transmission désignant le mode bouclé ;
▪ Une émission par le nœud ayant émis l'invitation au nœud relai d'une information comprenant la découverte du troisième nœud et indiquant une nouvelle topologie de la bulle radio;
▪ Une suspension du mode relai.

Selon un mode de réalisation, la fréquence d'émission du jeton de parole est plus élevée que celle d'émission d'un jeton d'invitation.

Selon un mode de réalisation, la fréquence d'émission du jeton d'invitation au sein d'une bulle radio est configurable par le nœud de plus grande priorité.

Un autre objet de l'invention concerne un procédé d'échange de données entre au moins deux nœuds mobiles d'un réseau IP ad hoc selon la revendication 16.

Un autre objet de l'invention concerne un contrôleur de données d'un nœud mobile selon la revendication 17.

Selon un mode de réalisation, le contrôleur de données d'un nœud mobile comprend un calculateur pour :
▪ recevoir et générer un jeton de parole ;
▪ recevoir et générer un jeton d'invitation périodiquement de sorte à engager un procédé de découverte en cas de réception d'une réponse à une invitation ;
▪ traiter les étapes du procédé de découverte de l'invention ;
▪ traiter les étapes du procédé d'échange de données de l'invention.

Un autre objet de l'invention concerne un système de communication d'un nœud mobile pour l'échange de données IP dans un réseau ad hoc selon la revendication 18.

### BREVE DESCRIPTION DES FIGURES

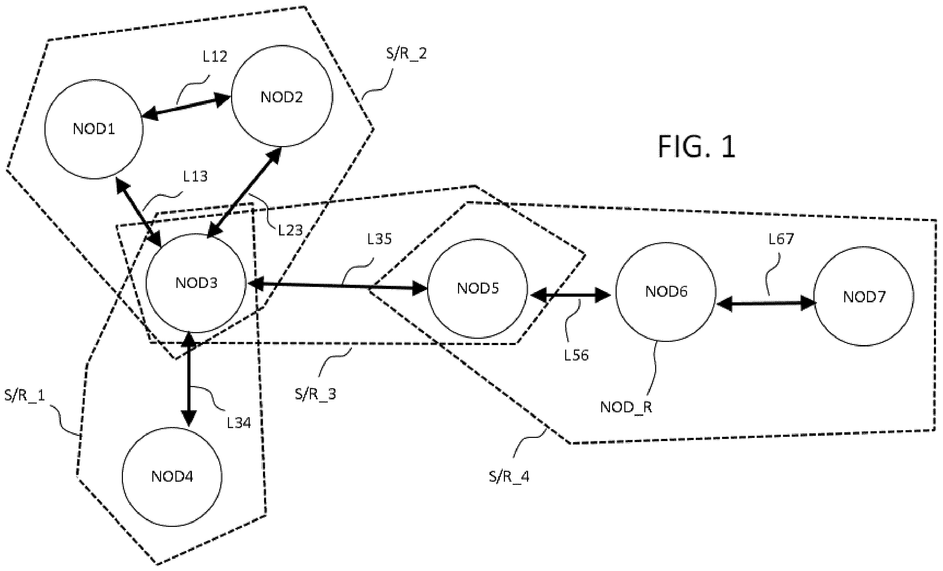

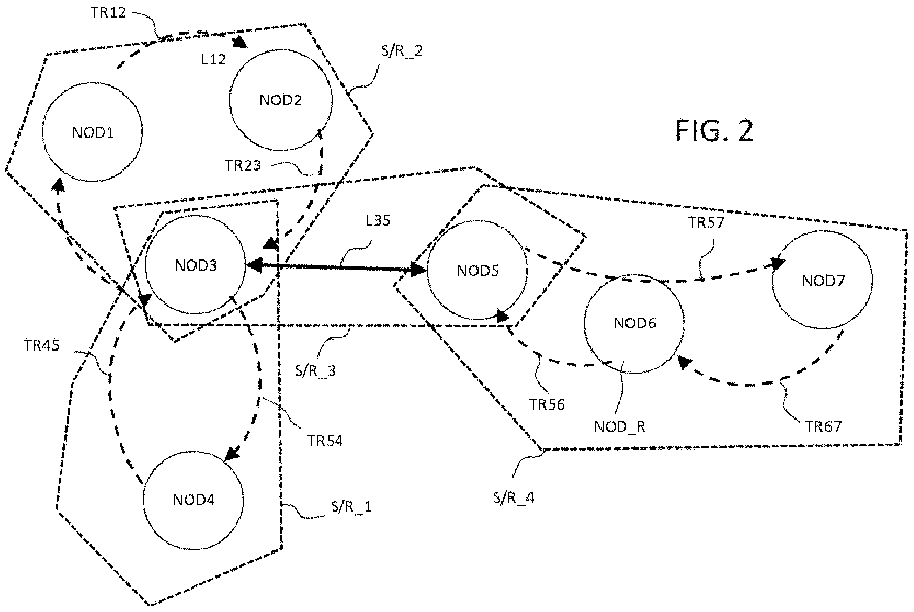

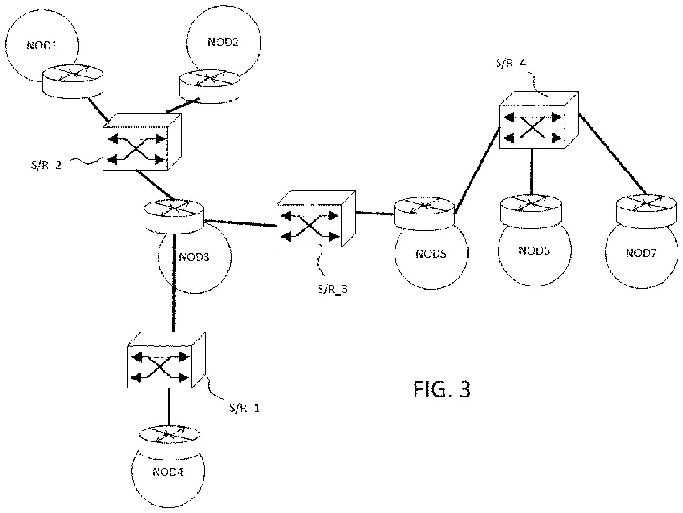

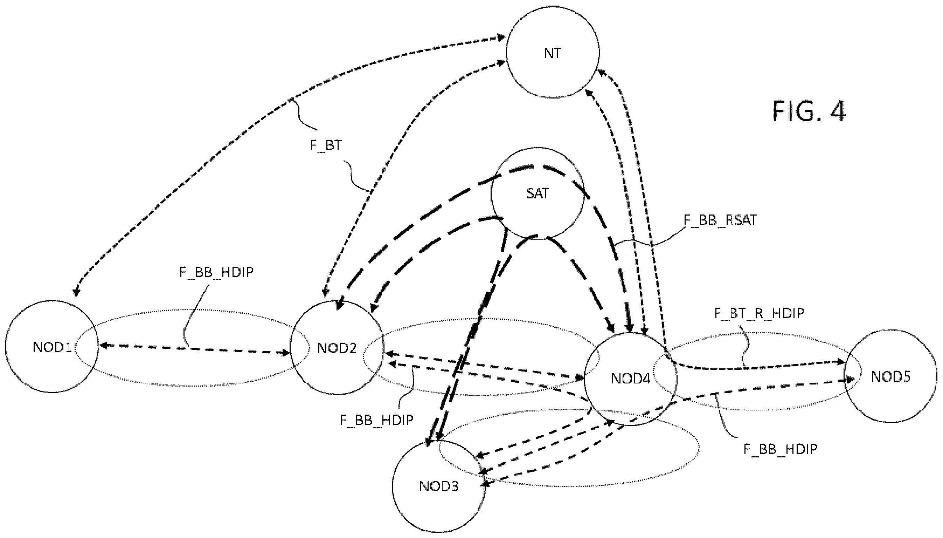

D'autres caractéristiques et avantages de l'invention ressortiront à la lecture de la description détaillée qui suit, en référence aux figures annexées, qui illustrent :
▪ figure 1 : un réseau établi selon le procédé de l'invention entre une pluralité de nœuds mobiles s'appuyant sur des liaisons radio ;
▪ figure 2 : le réseau établi selon le procédé de l'invention de la figure 1 représentant les liens d'échanges d'un jeton de parole pour coordonner les transmissions dans des bulles radio ;
▪ figure 3 : le réseau établi selon le procédé de l'invention des figures 1 et 2 offrant une architecture réseau de type réseau IP ;
▪ figure 4 : une représentation de liens physiques reposant sur des liaisons radio et satellite permettant d'étendre la couverture du réseau établi selon le procédé de l'invention.

### DESCRIPTION

### Liaisons radios

La figure 1 décrit un réseau ad hoc de nœuds mobiles notés NODi,_{i∈[1 ;N]}. Dans l'exemple décrit ci-après les nœuds mobiles NODi,_{i∈[1 ;N]} sont des navires ou des bateaux comprenant une antenne de liaison radio permettant la réception et l'émission de données. Dans un mode de réalisation de l'invention, les liaisons radio sont émises dans la bande de fréquence V/UHF. Selon d'autres modes de réalisation, d'autres gammes de fréquence peuvent être utilisées pour établir des liaisons radios entre nœuds mobiles.

### Horizon radio

Sur la figure 1 sont représentées les liaisons radios L12, L13, L23, L34, L35, L56, L67 entre chaque nœud NODi,_{i∈[1 ;N]} voyant un voisin dans son « horizon radio ». L'horizon radio représente la portée radio suffisante pour établir une communication entre deux nœuds mobiles. Il est possible dans le domaine maritime et selon les gammes de fréquence utilisées que l'horizon radio soit limité notamment par les puissances d'émission utilisées et par la courbure de la terre. D'autres phénomènes peuvent limiter la portée radio entre deux nœuds mobiles comme la directivité d'une antenne mais qui ne sont pas plus détaillés ici. On considère que deux nœuds ont sensiblement les mêmes horizons radios. Cependant, dans certaines configurations, comme par exemple entre un satellite et un navire ou entre deux navires ayant des antennes de différentes puissances ou des hauteurs d'antennes différentes, les horizons radios ne sont pas équivalents. Dans ce cas, les deux nœuds pourront établir une bulle radio ensemble lorsque chaque nœud entrera dans l'horizon radio de l'autre nœud.

Les liaisons radio sont représentées lorsqu'un nœud est dans l'horizon radio d'un autre nœud. A titre d'exemple sur la figure 1, le nœud mobile NOD1 n'est pas dans l'horizon radio du nœud NOD4 et réciproquement.

### Noeuds

Un nœud est une entité physique qui a priori peut être considéré comme mobile selon l'invention. Un nœud est donc capable de se déplacer dans l'espace, sur terre ou en mer selon la nature du nœud, de sa configuration et de la bande de fréquence utilisée. Les nœuds sont donc, par exemple, des nœuds mobiles maritimes, terrestres ou aériens. Le réseau peut comprendre une pluralité de ces nœuds ou une combinaison de ces différents types de nœuds.

Les procédés et le contrôleur de l'invention peuvent être également appliqués à un nœud fixe raccordé au réseau, ledit réseau comprenant au moins un nœud mobile.

Un nœud comprend des moyens d'émission et de réception radio sur au moins un canal de fréquence. L'invention se rapporte le plus généralement à des nœuds comprenant des moyens permettant d'établir des liaisons sur différents canaux au besoin afin d'établir des liaisons parmi différentes bulles radio.

Un nœud comprend des moyens de traitement de signaux permettant de recevoir, émettre, moduler, démoduler, amplifier et filtrer tous les types de signaux radios compatibles des protocoles de transmissions radios pouvant être employés par les procédés de l'invention. Plus communément, le nœud comprend un étage radio capable de traiter les données de signaux émis et reçus par le nœud radio, cet étage radio est également appelé chaine radio.

Un nœud comprend un contrôleur permettant d'effectuer des traitements sur des flux de données émis et reçus. Notamment, le contrôleur est capable de décoder, encapsuler et dés-encapsuler des trames de données. Le contrôleur comprend des moyens de calculs et au moins une mémoire pour effectuer des opérations sur les données émises et reçues dont par exemple des comparaisons de données ou des sommes de contrôle.

Le contrôleur comprend des interfaces permettant d'acheminer notamment des données à un terminal utilisateur, un routeur ou à l'étage radio. Inversement, les interfaces permettent de recevoir des données de ces différents composants.

Selon un mode de réalisation, le contrôleur est capable de traiter la coordination des émissions et de leurs séquences dans une bulle radio lorsqu'un jeton de parole ou d'invitation est reçu ou émis. Les échanges de données entre le contrôleur et l'étage radio peuvent être automatiquement pilotés grâce à l'analyse des données d'un jeton de parole.

Selon un mode de réalisation, une source de temps fiable permettant d'horodater la réception ou l'émission d'un tel jeton peut être utilisée. Selon un autre mode de réalisation, la source de temps fiable n'est pas nécessaire puisque l'émission du jeton et l'utilisation de l'horloge interne des équipements permet de coordonner les fins de réception d'un nœud et le début d'émission de ce même nœud. D'ailleurs, dans le mode de réalisation dans lequel le jeton de parole est émis après les données à transmettre d'un nœud, celui-ci marque directement la fin du message. Cette solution constitue un avantage supplémentaire de la configuration d'un tel réseau et une indépendance vis-à-vis d'une source de temps extérieure.

Un nœud du réseau IP peut comprendre un routeur. Selon un mode de réalisation, tous les nœuds mobiles du réseau IP comprennent chacun un routeur. Le routeur est capable d'adresser des trames IP sur des interfaces appropriées et de calculer des tables de routage dans un réseau IP comprenant un ensemble de sous-réseaux IP. Le contrôleur est capable de traiter les données topologiques radio afin de les transmettre à d'autres nœuds d'une même bulle radio lors d'un procédé de découverte par exemple.

Lorsqu'on évoque un nœud dans un contexte radio, la notation de « nœud radio » peut être employée étant donné que le nœud comprend une identité dans une bulle radio. La notion de « nœud radio » est associée au rôle du nœud dans la bulle radio qui est assuré par sa ou ses chaines radio et son contrôleur. Le fonctionnement d'un nœud radio s'assimile à un commutateur qui est capable d'adresser les chaines radio en fonction des données transmises par le routeur et de transmettre un jeton de parole au sein d'une bulle radio pour organiser les échanges de données.

Lorsqu'on évoque un nœud dans un contexte IP, la notation de « nœud IP » peut être employée étant donné que le nœud comprend une adresse IP dans un sous-réseau IP et dans le réseau IP. La notion de « nœud IP » est associée au rôle du nœud dans le réseau IP et le ou les sous-réseaux IP connus par ce nœud. Un protocole de routage, comme par exemple OSPF, permet d'organiser la distribution des données de routage dans le réseau IP. Enfin le contrôleur permet de délivrer les paquets IP au routeur et de recevoir des paquets IP à adresser à un nœud d'une bulle radio grâce à une table de commutation.

Un nœud dans la présente invention peut être en même temps considéré comme un nœud radio et un nœud IP du fait que les équipements qui supportent chaque fonction sont colocalisés sur le même nœud.

Les interfaces des différents équipements peuvent comprendre des adresses MAC et/ou des adresses IP. Un avantage du contrôleur de l'invention est qu'il permet de s'affranchir de la topologie IP lorsque les communications doivent être acheminées. Ainsi, le contrôleur IP adresse des messages au routeur en associant son interface avec une adresse MAC qu'il connait. Néanmoins, cette interface du routeur peut être également associée à une adresse IP qui n'est pas forcément connue du contrôleur. Cette architecture, du point de vue du contrôleur, permet de dissocier la couche réseaux IP de la couche de liaison de données radio ou de la couche physique. Cet avantage permet de rendre encore plus interopérable le contrôleur de l'invention.

### Sous-réseaux et nœuds de jonction

Les ensembles de nœuds représentés aux figures 1 et 2, dont les ensembles S/R_1, S/R_2, S/R_3, S/R_4, représentent des bulles radios dans lesquelles les nœuds radio s'échangent des données. Les bulles radios comprennent chacune préférentiellement entre deux et trois nœuds mobiles. Cette limitation permet d'optimiser un débit donné au sein d'une bulle radio.

Les sous-réseaux IP ont les mêmes notations S/R_1, S/R_2, S/R_3, S/R_4 que les bulles radios car à chaque bulle radio, l'invention permet d'associer un sous-réseau IP.

Les sous-réseaux IP sont connectés entre eux par l'intermédiaire de nœuds de jonction permettant d'établir des passerelles de communications entre différents sous-réseaux IP. Cette passerelle est réalisée grâce à la présence d'un routeur IP et d'une topologie du réseau IP diffusée à tous les nœuds et donc à chaque routeur. Chaque nœud peut potentiellement devenir un nœud de jonction dès lors qu'il supporte un système radio lui permettant d'établir au moins deux bulles radios dans différents canaux de fréquence. La notion de « nœud de jonction » n'a un sens que dans la topologie IP. Selon la topologie radio, qui permet de définir les bulles radios, les nœuds radio d'une bulle radio ne voient pas les nœuds radio d'une bulle radio adjacente, par exemple une bulle connectée par un nœud de jonction comportant deux chaines radio. C'est le routeur IP qui permet le passage d'une bulle radio à une autre bulle radio en adressant la chaine radio appropriée d'un nœud au travers le contrôleur.

Un avantage de l'invention consiste précisément à faire se correspondre, en termes de nœuds, des bulles radios et des sous-réseaux IP de manière à étendre un réseau IP ad hoc de proche en proche par l'intermédiaire des bulles radios. Un nombre donné de bulles radios peut être supportés par un même nœud dans la mesure où il comprend un nombre d'antennes radiofréquences équivalent au nombre donné de bulles radio envisagé. Préférentiellement, un nœud de jonction supportera au maximum quatre bulles radio, ce qui revient à préciser qu'un tel nœud comprendra quatre chaines radio d'émission/réception. Selon un exemple de réalisation, les quatre chaines radio peuvent être supportées par quatre antennes permettant d'établir des communications dans quatre canaux distincts. Selon un autre exemple, les quatre chaines radio peuvent utiliser des éléments permettant de commuter et de multiplexer les signaux vers différents types d'antennes pour réaliser des canaux dédiés. Ce dernier exemple peut avoir pour avantage de réduire le nombre d'antennes embarqués dans un nœud.

Un nœud de jonction est, par exemple, un nœud appartenant à deux bulles radios configurées chacun dans deux canaux de fréquence différents. Un nœud de jonction est également un nœud appartenant à deux sous-réseaux IP. Ainsi un nœud de jonction est capable de transmettre au nœud d'un sous-réseau IP la topologie IP des sous-réseaux IP qu'il connait.

On note sur la figure 1 que :
▪ le sous-réseau S/R_2 est connecté avec le sous-réseau S/R_1 par l'intermédiaire d'un nœud de jonction NOD3.
▪ le sous-réseau S/R_1 est connecté avec le sous-réseau S/R_3 par l'intermédiaire d'un nœud de jonction NOD3.
▪ le sous-réseau S/R_2 est connecté avec le sous-réseau S/R_3 par l'intermédiaire d'un nœud de jonction NOD3.
▪ le sous-réseau S/R_4 est connecté avec le sous-réseau S/R_3 par l'intermédiaire d'un nœud de jonction NOD5.

Dans ce cas de figure, le nœud NOD3 joue un rôle dans trois bulles radio S/R_1, S/R_2, S/R_3 en allouant trois canaux fréquentiels distincts à chaque bulle radio. D'un point de vue topologique « radio », le nœud NOD3 comprend trois chaines radio distinctes allouant trois canaux différents. Les signaux une fois reçus et démodulés par une des trois antennes de NOD3, sont décodés par le contrôleur de manière à extraire automatiquement des trames de données IP. Les trames de données IP et les en-têtes IP sont alors réémises :
▪ soit vers une interface radio pour être réacheminées dans le réseau radio ;
▪ soit vers une interface locale pour être traitées par un équipement du nœud IP en question.

Le nœud NOD 3 n'a qu'une adresse IP et peut donc appliquer différents traitements aux données IP reçues selon si les trames IP lui sont adressées ou si les trames IP doivent être routées vers un autre nœud.

Grâce à la correspondance des bulles radios et des sous-réseaux IP, NOD3 et NOD5, qui sont dans une même bulle radio S/R_3, permettent l'établissement de communication entre :
▪ le sous-réseau IP S/R_2 et le sous-réseau IP S/R_4 par l'intermédiaire du sous-réseau IP S/R_3 ;
▪ le sous-réseau IP S/R_1 et le sous-réseau IP S/R_4 par l'intermédiaire du sous-réseau IP S/R_3.

Les communications entre différents sous-réseaux IP non directement connectés entre eux est possible grâce au procédé de découverte de l'invention dans lequel les topologies IP ont été échangées entre les différents nœuds lors de leur découverte.

Un avantage de l'invention est de limiter le nombre de nœuds accessibles à une bulle radio pour :
▪ d'une part, garantir un seuil minimal de débit de données lors des communications tout en limitant les interférences grâce à :
   ▪ d'autre part, la coordination des échanges de données permise par l'échange d'un jeton de parole imposant des temps de parole successifs des différents nœuds.

La figure 2 représente notamment deux modes de communications au sein de différentes bulles radio parmi lesquels on trouve un mode « bouclé » et un mode « relayé ». Les deux modes reposent sur l'émission d'un jeton de parole de proche en proche pour coordonner les transmissions au sein d'une même bulle radio, c'est-à-dire dans un canal de fréquence donné.

### Jeton de parole

Selon un mode de réalisation, le protocole d'échange d'un jeton de parole est sensiblement celui du protocole token ring développé par IBM. Le fonctionnement d'un tel protocole repose sur une répartition des fenêtres d'émissions au sein d'une pluralité de nœuds.

Selon une première variante, le nœud d'une bulle radio qui a le jeton de parole émet des données et termine ses communications par l'émission d'un jeton de parole indiquant le prochain nœud devant recevoir le jeton. Cette solution permet d'utiliser une fenêtre de temps adaptée aux besoins. Notamment, lorsque la durée pour transmettre les données est plus courte que la taille de fenêtre, l'émission du jeton de parole permet d'écourter la taille de la fenêtre d'émission maximale. Si la durée pour transmettre les données est plus longue que la taille de fenêtre maximale, les données seront mises en file d'attente et envoyées en différentes parties après que le jeton de parole ait circulé dans la bulle radio plusieurs fois.

Selon une seconde variante, le jeton de parole peut être émis préalablement à l'émission de données. Dans ce dernier cas, une fenêtre de temps pendant laquelle les émissions dudit nœud est réservée. Puis lorsque la fenêtre de temps est écoulée, le nœud termine son émission.

Le nœud ayant reçu le jeton de parole le réémet à son tour à destination d'un autre nœud ou du même nœud, si le sous-réseau ne comprend que deux nœuds. A son tour, le nouveau nœud recevant le jeton de parole possède une fenêtre de temps d'émission qui lui est réservée.

Un avantage d'un mode de communication reposant sur l'échange d'un jeton de parole est d'éviter des pertes d'informations lors des échanges radio, de diminuer les interférences et de garantir un débit de données pendant un certain laps de temps, ce dernier étant géré dynamiquement entre un temps minimal et un temps maximal en fonction de la quantité de de données à émettre. Enfin, l'échange d'un jeton de parole permet de configurer dynamiquement le réseau en fonction d'un nouvel entrant ou d'un nœud sortant.

L'émission du jeton de parole est susceptible d'être reçu par tous les nœuds présents dans une zone donnée dans un canal de fréquence défini, c'est-à-dire dans la bulle radio. Ainsi, le jeton de parole comprend une trame de données indiquant le prochain nœud bénéficiant d'une fenêtre temporelle d'émission l'autorisant à émettre. Une configuration peut se produire dans laquelle le jeton de parole est émis et reçu par un nœud dont l'identité n'est pas indiquée dans le jeton de parole comme étant le prochain émetteur. Ainsi, chaque nœud comprend un calculateur permettant de décoder les trames de données du jeton de parole reçu par voie radio et d'exploiter l'information précisant quel est le prochain nœud pouvant émettre. Ce calculateur peut être celui du contrôleur. Ainsi, le jeton de parole est diffusé au sein de la bulle radio et indique l'identité du prochain nœud bénéficiant d'une fenêtre d'émission.

Un intérêt du procédé de l'invention est de décorréler le mécanisme d'adressage du jeton de parole du mécanisme de transmission de données utiles. Ainsi, par exemple lorsque le nœud NOD5 émet un jeton de parole vers le nœud NOD7, via le nœud relai NOD6, les données transmises consécutivement à l'émission du nœud NOD5 peuvent être destinées au nœud NOD6. Ainsi, le protocole de transmission du jeton de parole est indépendant des adressages des flux de données utiles succédant ou précédant l'émission du jeton de parole. Les mécanismes d'adressage du jeton de parole et d'adressage des données utiles impliquent une diffusion des données avec des adressages qui peuvent être soient identiques (si on émet des données à celui qui reçoit le jeton de parole), soient différents (si on émet des données à un autre nœud que celui qui reçoit le jeton de parole).

Toutefois, les jetons de parole et les trames de données utiles sont transmis au sein d'un même canal de fréquence propre à la bulle radio considérée.

### Limitation des interférences

Lorsqu'un nœud est un nœud de jonction, c'est-à-dire qu'il joint deux sous-réseaux IP, comme les nœuds NOD3 et NOD5, les gammes de fréquence radio des deux bulles radios associées aux deux sous-réseaux IP peuvent être configurées pour limiter les interférences entre les bulles radios.

Par exemple,
▪ les liaisons de la bulle radio S/R_1 peuvent être assurées par une première bande de fréquence B1 ;
▪ les liaisons de la bulle S/R_2 peuvent être assurées par une seconde bande de fréquence B2 ;
▪ les liaisons de la bulle S/R_3 peuvent être assurées par une seconde bande de fréquence B3.

Dans ce cas de figure, on peut configurer B1, B2 et B3 de manière à limiter les interférences entre différentes émissions de nœuds de différentes bulles. Par exemple, les bandes B1, B2 et B3 peuvent être choisies pour limiter les recouvrements spectraux entre ces différentes bandes de fréquence ou prendre en compte les harmoniques d'une bande de fréquence.

Pareillement, la bande de fréquence B4 utilisée pour les fréquences d'émission des liaisons de la bulle radio S/R_4 peut être choisie pour limiter les interférences avec les autres transmissions. Dans ce cas de figure, étant donné que les bulles radios S/R_1 et S/R_2 d'une part et que la bulle radio S/R_4 d'autre part n'ont aucun nœud en commun, les bandes B1 et B4 peuvent être proches, voire identiques, ainsi que les bandes B2 et B4.

De manière à limiter les interférences ou les autres phénomènes susceptibles de dégrader les transmissions radios entre nœuds les puissances et/ ou les modulations des signaux peuvent être configurées en complément ou en alternative de la configuration des bandes de fréquences pour optimiser la qualité des liaisons radios.

Un avantage est de de permettre une grande connectivité du réseau IP ad hoc et la prise en compte d'un grand nombre de nœuds grâce à l'extension permise par les jonctions de différentes bulles radios.

### Mode relayé

Un second mode de fonctionnement est décrit au regard de la bulle radio S/R_4 représentant trois nœuds mobiles NOD5, NOD6 et NOD7. Dans cette bulle radio, les nœuds ne sont pas tous mutuellement dans l'horizon radio des deux autres nœuds. Dans le cas de figure de la figure 1, le nœud NOD5 est à portée radio du nœud NOD6 et peut établir des communications avec ce dernier. Il en est de même de la configuration des nœuds NOD6 et NOD7 qui se voient mutuellement directement car ils sont à « vue radio ». On constate que les nœuds NOD5 et NOD7 sont au-delà de leur propre horizon radio et ne peuvent établir une liaison radio directement entres eux.

Dans ce cas de figure, le nœud NOD6 joue un rôle particulier en devenant un nœud relai. Le procédé de l'invention permet d'identifier et de déterminer automatiquement un nœud relai, tel que le nœud NOD6, ayant une configuration permettant de relayer des communications entre deux nœuds étant au-delà de leur horizon radio, tels que les nœuds NOD5 et NOD7. Cette configuration permet un mode relayé des transmissions au sein de la bulle radio S/R_4. Le nœud NOD 5 émet un jeton de parole qui est relayé par le nœud NOD6 au nœud NOD7 qui génèrera alors à son tour une fenêtre d'émission successivement à l'émission des données par NOD5.

Le procédé de l'invention autorise qu'un nœud relai puisse être à priori n'importe quel nœud. La configuration opérationnelle détermine la configuration topologique radio. De ce point de vue, il est possible qu'un nœud relai soit un nœud de jonction. Puisque la topologie radio n'a pas connaissance de la topologie réseau, c'est-à-dire de la topologie IP, la configuration radio d'un nœud ne dépend pas de la topologie IP. Il y a donc une indépendance de configuration d'un nœud IP et d'un nœud radio bien qu'il s'agisse du même nœud.

Dans le cas de figure d'une bulle radio comportant un nœud relai, le procédé permet toujours d'émettre un jeton de parole dans le sous-réseau S/R_4 entre les différents nœuds. Un sens est déterminé lors de la découverte des nœuds entre eux et le nœud à l'initiative de la création du relais détermine le sens de circulation du jeton de parole.

Dans le cas de la figure 2, on comprend que le nœud NOD6 joue un rôle de relayeur du passage du jeton de parole dans la liaison TR57. Ainsi le jeton de parole émis par le nœud NOD5 dans ce cas de figure est relayé par le nœud NOD6 au nœud NOD7. Le nœud NOD6 à réception du jeton de parole émis par NOD5 est capable de traiter les données d'adressage radio du jeton de parole et de le réémettre à son tour vers le nœud NOD7.

Ainsi, dans la configuration du mode relayé, le fonctionnement de la transmission du jeton de parole est autorisé grâce au procédé de l'invention.

### Mode bouclé

La figure 2 représente un sens de circulation du jeton de parole entre les nœuds NOD1, NOD2 et NOD3 lorsque les nœuds forment une boucle et sont tous à « vue radio » les uns des autres dans une même bulle radio. Une liaison est notée TR12 pour représenter le passage du jeton de parole du nœud NOD1 vers le nœud NOD2. Les autres liaisons TRnp annotées sur la figure 2 suivent le même formalisme d'un échange de jeton du nœud NODn vers le nœud NODp.

Ce premier mode de fonctionnement est représenté au sein de la bulle radio S/R_2. Les nœuds mobiles NOD1, NOD2 et NOD3 de la bulle radio S/R_2 sont tous situés dans l'horizon radio des autres nœuds de la même bulle radio. Ainsi, le nœud NOD1 voit les nœuds NOD2 et NOD3, le nœud NOD2 voit les nœuds NOD1 et NOD3, le nœud NOD3 voit les nœuds NOD1 et NOD2.

Dans ce cas de figure, le procédé de l'invention permet d'établir un mode de communication basé sur l'échange d'un jeton de parole qui est échangé tour à tour entre deux nœuds directement à « vue radio ». Le jeton est échangé dans ce cas par tous les nœuds, par exemple, de manière circulaire.

Généralement, un mode de communication bouclé est précédé par un « mode relayé ». En effet, un nœud entrant dans une bulle radio comportant déjà deux nœuds est généralement découvert par l'un des deux nœuds déjà présents dans la bulle radio. Lorsque la priorité de l'un des trois nœuds n'impose pas d'exclusivité d'un mode de communication aux autres nœuds, le jeton d'invitation comporte un indicateur précisant qu'un nœud sera le nœud relai. Ce mode sera le mode de communication dans la bulle radio établie jusqu'à ce que les trois nœuds se voient à « vue radio ».

### Limitation du nombre de nœuds / sous-réseau

Selon un mode de réalisation, le procédé de découverte de l'invention permet de limiter le nombre de nœuds mobiles accédant à une même bulle radio, et donc à un même sous-réseau IP. Selon un exemple de réalisation, la limitation du nombre de nœuds mobiles dans une même bulle radio peut être définie à 2 ou 3 nœuds.

Cette configuration permet d'obtenir un bon compromis entre :
▪ l'alternance des fenêtres d'émission entre nœuds d'une même bulle radio permettant de limiter les interférences ;
▪ la réservation de bande passante permettant d'augmenter le débit au sein d'une bulle radio et ;
▪ l'établissement d'une couche physique permettant de déployer un protocole de type IP de transmettre des paquets IP d'un sous-réseau IP à un autre grâce à :
   o la correspondance topologique des sous-réseaux IP et des bulles radios et ;
   o à la présence de nœud(s) de jonction permettant de « voir » deux sous-réseaux IP au moyen d'un routeur.

### Cas de la bulle radio à deux nœuds

Les figures 1 et 2 représentent également un cas d'une bulle radio comportant uniquement deux nœuds NOD3 et NOD4 s'échangeant un jeton de parole pour déterminer les périodes d'émission et de réception de chaque nœud. Ce cas de figure est également appelé liaison point-à-point.

### Indication d'une émission après transmission du jeton

Lorsque le jeton de parole est transmis avant les données utiles émises dans la fenêtre de parole, le procédé d'échange de donnée de l'invention permet au jeton de parole de comprendre un indicateur de données émises permettant de préciser si des données sont transmises ou pas successivement à l'émission du jeton de parole émis et en quelle quantité.

Lorsqu'un nœud ne communique aucune donnée à un autre nœud, il transmet le jeton de parole en indiquant qu'aucune donnée ne sera transmise consécutivement à l'émission du jeton de parole. Dans ce cas de figure, le nœud récepteur peut réémettre le jeton de parole rapidement pour réserver une fenêtre temporelle d'émission si des données utiles doivent être émises par ce dernier. A cette fin, le jeton de parole comprend dans ce cas un indicateur précisant la présence de données à transmettre.

L'indicateur de données à transmettre permet d'optimiser le débit en ne réservant une fenêtre temporelle pour la transmission de données que si des données seront transmises après l'émission du jeton.

En revanche, si les nœuds mobiles NOD3 et NOD4 ont des données à se transmettre réciproquement à tour de rôle, la transmission du jeton peut indiquer que des données seront émises consécutivement à l'émission du jeton pendant un laps de temps prédéfini.

Dans un autre mode, le jeton de parole est émis en fin d'émission. Ce cas de figure permet de clôturer la durée de la fenêtre d'émission. Le nœud recevant et détectant le jeton de parole ayant alors à son tour un temps d'émission.

Selon un premier mode de réalisation, les fenêtres d'émission maximales sont prédéfinies et peuvent, par exemple, être configurées avec une durée de quelques centaines de millisecondes. La durée maximale des fenêtres peut être une donnée de configuration de la topologie de la bulle radio.

Selon un second mode de réalisation, la durée maximale des fenêtres d'émission peut être déterminée à la volée. Dans ce cas de figure, leur durée peut être indiquée par une trame du jeton de parole. Cela permet de configurer une architecture dynamiquement en fonction de besoins propres à un contexte particulier.

La configuration de la taille maximale des fenêtres peut être une résultante d'un compromis entre le débit souhaité et des effets de gigue ou de latence induits.

### Transmission de la topologie des sous-réseaux entre nœuds

En outre, le jeton de parole comprend des trames de données qui permettent de transmettre des informations sur une partie du réseau connu du nœud émetteur et non encore connu d'un nœud récepteur. Par exemple, c'est le cas lorsque le nœud NOD7 entre dans la bulle radio S/R_4. Lors de la découverte du nœud NOD7 par le nœud NOD5 ou NOD6, deux topologies sont transmises.

Une première topologie, dite « topologie radio », est transmise indiquant l'identité des nœuds présents dans la bulle radio, les priorités d'au moins un nœud prioritaire le cas échéant, la présence d'un nœud relai et éventuellement des données de changements de topologie. Par exemple, un nœud relai peut devenir un nœud qui n'est plus un nœud relai. Les transmissions successives du jeton de parole permettent de transmettre la topologie radio d'une bulle radio et de ses modifications au cours du temps. Des champs réservés du jeton de parole permettent d'encoder ces informations.

Une seconde topologie, dite « topologie IP », est transmise au moyen du jeton de parole. Chaque modification de la topologie IP peut ainsi être prise en compte lors du transfert du jeton de parole. La topologie IP comprend les adresses IP de chaque nœud connus du sous-réseau IP. Il peut notamment s'agir des adresses IP des interfaces des routeurs dans le sous-réseau IP considéré.

En outre, chaque routeur est capable grâce à un protocole de routage et de configuration de données de routage d'échanger avec les autres routeurs données propre aux tables de routage.

A titre d'exemple, lorsque le nœud NOD 7 est découvert par le nœud NDO6, la topologie IP comprend les adresses des sous-réseaux IP S/R_1, S/R_2 et S/R_3, les adresses IP de chaque nœud et les tables de routages connus par le nœud NOD 6. Cette topologie est transmise par l'intermédiaire des trames de données du jeton de parole ou encore par des trames de données succédant ou précédant le jeton de parole. Un protocole OSPF peut être utilisé entre routeurs IP du réseau. Bien que les données de topologie IP sont transmises potentiellement au travers différentes bulles radio lors de la découverte du réseau IP, la topologie radio et les nœuds radio n'ont pas connaissance de l'architecture IP.

C'est aussi, par exemple, le cas du nœud NOD5 qui peut communiquer avec NOD3 des informations sur la nouvelle topologie du sous-réseau S/R_4, comme par exemple l'adresse IP du nouvel entrant NOD7 dans le sous-réseau IP S/R_4.

### Noeud prioritaire

Afin de définir et/ou d'optimiser :
▪ la stratégie de distribution des jetons d'invitation dont notamment sa fréquence d'émission par les nœuds d'une bulle parole et ;
▪ Le nombre et l'identité des nœuds présents dans une même bulle radio (priorité à l'extension du réseau) ;
▪ Le seuil minimum d'un débit d'un canal de fréquence d'une bulle radio (priorité au débit),

l'invention permet la détermination d'un nœud prioritaire pour définir une stratégie adaptée aux besoins d'un cas d'espèce.

Selon un mode de réalisation, au moins trois niveaux de priorité peuvent être définis. Un niveau de priorité P2 maximal est défini et est supérieur à un niveau de priorité P1 intermédiaire. Le niveau de priorité P0 indique aucune priorité et correspond donc à la priorité la plus basse. Les priorités sont affectées à chaque nœud sur chaque chaîne radio dont il dispose.

La gestion de priorité permet de définir un premier mode de communication haut débit entre un nœud prioritaire et un second nœud. Lorsque le nœud prioritaire P2 accède à une bulle radio comprenant le second nœud pour transmettre des données vers le réseau IP, alors une nouvelle bulle radio est formée par ces deux nœuds et ne peut comprendre qu'un maximum de deux nœuds. Cela permet d'augmenter le débit du canal entre les deux nœuds et de réserver une ressource en bande passante/débit plus importante.

Les autres nœuds participant à la topologie originale sont exclus de la nouvelle bulle radio intégrant le nœud de priorité P2. Les communications IP établies sur la précédente bulle radio sont alors rompues et de nouvelles communications démarrent entre les nœuds impliqués sur la nouvelle bulle radio.

Lorsque le nœud prioritaire P2 découvre un nouveau nœud, l'échange du jeton d'invitation entre les deux nœuds permet de définir une nouvelle bulle radio qui sera limitée à la présence de ces deux nœuds.

Lorsqu'un nœud a une priorité P2, le mode relai n'est pas autorisé.

Un second mode de communication est décrit dans lequel le niveau de priorité d'un nœud d'une bulle radio est associé à la priorité P1. Le nœud de priorité P1 impose sa priorité lors du procédé de découverte à un ou des autres nœuds d'une même bulle radio n'ayant pas de priorité (priorité P0).La priorité P1 autorise des bulles radios comportant trois nœuds. La gestion d'un nœud relai est alors permise.

Les niveaux de priorité P1 et P2 permettent au nœud qui les exprime de choisir le ou les autres nœuds avec lesquels il constitue la bulle radio. Ceux qui ne sont pas retenus peuvent initier une autre bulle sur une autre fréquence.

Un avantage de la gestion de différents niveaux de priorité est de permettre une topologie radio s'adaptant à différents besoins de nœuds d'une même bulle radio. Ainsi, la gestion de trois niveaux de priorité permet d'adapter une architecture de bulle(s) radio optimisée selon les besoins de nœuds accordant :
▪ soit une priorité à la réservation d'un débit maximal ;
▪ soit une priorité à l'extension du réseau à un maximum de nœuds présentant le meilleur intérêt de communication les uns avec les autres.

### Couche réseau - TCP/IP

La figure 3 représente le réseau du point de vue du protocole IP. Chaque nœud est associé à un routeur IP. Ainsi, chaque routeur IP est capable d'acheminer les paquets IP selon une topologie IP connue du réseau. La transmission se fait de proche en proche par le calcul d'un chemin de routage. Chaque contrôleur de chaque nœud, grâce à une table de commutation, est alors capable d'associer une bulle radio permettant d'atteindre le prochain routeur d'une route précédemment calculée. Le routage des paquets IP est permis grâce à un protocole physique d'échanges de données tel que décrit précédemment et permettant de diminuer les interférences entre les différents nœuds. Le réseau IP ainsi constitué permet d'établir un réseau dynamique facilement adaptable à la découverte de nouveaux nœuds.

Pour traiter l'interface entre la couche radio et la couche IP au niveau d'un nœud, le contrôleur IP de l'invention est capable de traiter les données de la couche radio vers la couche IP et réciproquement de la couche IP vers la couche radio.

Le contrôleur de l'invention décode le flux de données reçu par une antenne radiofréquence d'un nœud. Parmi les données reçues, le contrôleur extrait des trames radio reçues: les trames IP. Les trames IP sont alors acheminées vers le routeur IP qui traite l'acheminement des paquets IP grâce à une table de routage.

Lorsque le routeur achemine le paquet IP vers un autre routeur, il détermine l'adresse IP du prochain routeur du sous-réseau IP devant être adressé. Le paquet IP est adressé au contrôleur du nœud qui encapsule les données IP dans une trame radio. L'entête de la trame radio comprend une identité radio d'un nœud radio dans la bulle radio. Le contrôleur de l'invention comprend une table de commutation associant les adresses MAC (adresse d'interface) de chaque routeur d'un sous-réseau IP avec son identité radio au sein de la bulle radio.

Si une trame IP est destinée au nœud dont le routeur décode la trame, alors les données sont traitées localement et transmises à un équipement interface permettant, par exemple, à un opérateur de recevoir ces données, de les sauvegarder ou de les exploiter directement.

Si une trame IP est destinée à un autre nœud que le nœud recevant les trames, le contrôleur établit une correspondance entre :
▪ d'une part, la route IP permettant d'adresser les données IP au nœud destinataire dans le réseau IP et ;
▪ d'autre part, la bulle radio dans laquelle un nœud de la route est présent de sorte à acheminer de proche en proche les trames de données IP vers le nœud destinataire.

Le contrôleur de données de l'invention permet de construire des trames radio avec un adressage adéquate en fonction de trames IP reçues et réciproquement. L'adressage radio comprend le codage de l'identité du nœud radio adressé dans la bulle radio. Le nœud radio peut être :
▪ un nœud IP intermédiaire présent dans la route calculée par le routeur ou ;
▪ un nœud destinataire.

La trame radio est alors émise par le nœud après avoir reçu le jeton de parole dans la bulle radio appropriée.

Par ailleurs, un avantage de l'invention est que le contrôleur de l'invention n'applique aucun mécanisme visant à garantir l'acheminement des données (acquittements, retransmission), tout comme ne le fait pas la couche IP, dans la mesure où cette démarche relève des couches au-dessus d'IP (TCP). Le contrôleur effectue toutefois un contrôle d'intégrité afin de ne pas délivrer des trames erronées au routeur IP.

La figure 4 représente un cas de figure dans lequel des bulles radios peuvent être établies entre différents nœuds. A titre d'exemple, une liaison F_BT_RSAT correspond à une liaison entre un satellite et un NOD, par exemple un navire. Dans la figure 4, des liaisons représentent les canaux physiques permettant d'établir des bulles radios entre deux ou trois nœuds pour chaque bulle radio.

Le nœud SAT correspond à un satellite et le nœud NT correspond à un nœud terrestre par exemple présent sur une côte à proximité de la mer. Les nœuds NODi,_{i∈[1 ;N]} représentent des navires.

Les liaisons F_BB_HDIP concerne les liaisons physiques entre deux nœuds NODi,_{i∈[1 ;N]} tels que des navires.

Les liaisons F_BT_HDIP concerne les liaisons physiques entre un nœud NODi,_{i∈[1 ;N]} tel qu'un navire un nœud NT tel qu'un nœud terrestre.

Les liaisons F_BB_RSAT concerne les liaisons entre deux nœuds NODi,_{i∈[1 ;N]} tels que deux navires via un satellite SAT.

Les liaisons F_BT concerne les liaisons entre un nœud NODi,_{i∈[1 ;N]} tel qu'un navire et un nœud terrestre tel qu'une station terrestre notée NT sur la figure 4.

Un tel réseau IP peut être supporté selon les procédés de l'invention grâce à la mise en place de bulles radio comportant chacune un nombre limité de nœuds. Ainsi, selon le schéma de la figure 4, le nœud NOD5 peut émettre théoriquement des données au nœud NOD1 via différents chemins physiques, comme par exemple :
- Chemin 1 : NOD5 -> NOD4 -> NOD2 -> NOD1
- Chemin 2 : NOD5 -> NOD4 -> NOD2-> NT -> NOD1
- Chemin 3 : NOD5 -> NOD4 -> SAT-> NOD2-> NOD1
- Chemin 4 : NOD5 -> NOD4 -> SAT-> NOD2-> NT -> NOD1
- Chemin 5 : NOD5 -> NOD4 -> NOD3 -> NOD2-> NOD1
- Chemin 6 : NOD5 -> NOD4 -> NOD3 -> SAT -> NOD2-> NOD1

Le routeur du nœud NOD5, connaissant la topologie du réseau IP ad hoc, est capable de déterminer une route calculée comme la plus optimum en fonction des débits de chaque liaison physique ou d'autres contraintes de routage selon la qualité de service associée aux données transmises. A titre d'exemple la liaison physique NOD5 -> NOD4 -> NT -> NOD1 peut être considérée comme la plus optimale.

### Contrôleur

Le contrôleur de l'invention est donc capable de traiter des données radio pour les exploiter dans le réseau IP et inversement il est capable de traiter des données IP pour les acheminer via une liaison physique telle qu'une bulle radio.

Le contrôleur IP comprend une table de commutation associant les identités de chaque nœud d'une bulle radio connue par le contrôleur à une adresse MAC (i.e. matériel) d'un routeur du sous-réseau IP correspondant. Ainsi, un contrôleur est capable d'adresser des trames radio encapsulant des trames IP au nœud de la bulle radio correspondant au routeur adressé.

La table de commutation comprend également une association de chaque identité de nœud avec une identité d'une bulle radio connue. Ainsi, le contrôleur peut adresser différentes chaines radio. Cette association peut simplement faire se correspondre une interface radio du contrôleur avec un nœud radio donné. Ainsi, quand un nœud est adressé, le contrôleur détermine le port de sortie (ou l'interface) sur lequel les paquets doivent être émis pour être traités par la chaine radio appropriée du nœud. Cette configuration permet notamment d'assurer le rôle de nœud de jonction à un nœud appartenant à deux bulles radios.

Lorsque les trames radio sont décodées, le contrôleur est en mesure de délivrer les paquets IP au routeur. Le routeur est alors capable de :
▪ Soit sauvegarder les données IP ou les transmettre à une interface du nœud recevant ces données pour qu'elles puissent être exploitées par un opérateur ;
▪ Soit calculer une nouvelle adresse IP d'un routeur du sous-réseau en fonction de la table de routage et retransmettre ces données à l'étage radio pour qu'elles soient transmises et adressées à un nœud radio au sein de la bulle radio.

Une autre fonction adressage DHCP peut être assurée par le contrôleur. Selon un mode de réalisation, le contrôleur est capable d'attribuer lors de l'initialisation ou la configuration du routeur au moins une adresse IP au dit routeur. Cela permet d'assurer une cohérence de politique d'adressage IP. Le contrôleur est donc capable de jouer un rôle de serveur DHCP.

Selon un mode de réalisation, le contrôleur comprend un chiffreur de lien chiffrant les données émises vers la chaine radio.

### Procédé de découverte

Le procédé de découverte de l'invention permet donc à deux nœuds arrivant mutuellement dans le périmètre radio de l'autre nœud d'établir une bulle radio et donc un sous-réseau IP. Le procédé comprend donc la génération d'un sous-réseau IP et la génération d'un adressage IP du sous-réseau IP et des nœuds. Chaque nœud connaissant d'autres nœuds transmet alors la topologie IP.

La découverte est établie par l'émission d'un jeton d'invitation d'un nœud dans une zone correspondant à une portée radio du nœud. Lorsqu'un nœud se trouve dans cette zone et reçoit le jeton d'invitation, il est invité à répondre dans une fenêtre de temps impartie à cette invitation. Les identités sont échangées lors de cet échange de données. Lorsque les deux nœuds ont procédé à cet échange d'informations, le processus de génération d'une bulle radio et d'un sous-réseau IP débute.

Les deux nœuds s'échangent un jeton de parole afin d'organiser les échanges de données entre les deux nœuds. Une configuration particulière du procédé de l'invention permet aux deux nœuds d'émettre des jetons d'invitation régulièrement afin d'inviter un troisième nœud dans le bulle radio.

Ainsi, le procédé de découverte concerne également l'extension d'une bulle radio à un nouvel entrant sans pour autant générer un nouveau sous-réseau IP ou une nouvelle bulle radio.

Le procédé de découverte de l'invention comprend des étapes permettant de déterminer si une nouvelle bulle radio doit être créée ou si une bulles radio doit être étendue en fonction :
▪ des niveaux de priorité des nœuds et ;
▪ du nombre de nœuds se découvrant.

Le procédé de découverte de l'invention comprend toutes les étapes nécessaires permettant de réaliser les fonctions de découverte précédemment décrites.

### Procédé d'échange de données

L'invention concerne également un procédé d'échange de données permettant à un ensemble de nœuds d'échanger des trames IP par l'intermédiaire de liens physiques entre nœuds. Les liens physiques sont dans le contexte de l'invention des liaisons radiofréquences. Le procédé d'échange de données de l'invention, au sein d'une bulle radio, est coordonné par la transmission d'un jeton de parole et la définition de fenêtres temporelles d'émission attribuées selon le contexte à chaque nœud recevant tour à tour ledit jeton. Le procédé d'échange de données comprend toutes les étapes de traitement participant à l'adressage des données au sein du réseau IP. Ces étapes sont, notamment, réalisées par le contrôleur qui permet d'établir un dialogue entre la couche IP et la couche radio.

Le procédé d'échange de données de l'invention comprend toutes les étapes nécessaires permettant de réaliser les fonctions d'échange de données précédemment décrites entre les différents nœuds.

## Revendications

1. Procédé de découverte d'un réseau entre une pluralité de nœuds mobiles, le procédé comprenant :
▪ Emission périodique par une antenne d'un premier nœud mobile (NOD1) d'un premier signal radiofréquence comprenant une trame de données d'invitation, dit jeton d'invitation, un jeton d'invitation comportant des données relatives à une identité du nœud (Id_{NOD1}) qui émet ledit jeton ;
▪ Détection du premier signal par un second nœud mobile (NOD2) et décodage du jeton d'invitation du premier nœud (NOD1) ;
▪ Emission par une antenne du second nœud (NOD2) d'un second signal radiofréquence comprenant au moins un acquittement du jeton d'invitation, ladite émission étant réalisée dans une fenêtre de temps impartie subséquence à la réception du jeton d'invitation ;
▪ Création d'une bulle radio subséquente à la réception d'au moins un acquittement du jeton d'invitation, lesdites communications entre les nœuds de la bulle radio étant coordonnées par l'émission d'un jeton de parole entre lesdits nœuds, la transmission dudit jeton entre les nœuds d'une bulle radio définissant une séquence d'émission entre les différents nœuds, la bulle radio étant associée à une bande de fréquence partagée entre les nœuds de ladite bulle radio ;
▪ Création d'un sous-réseau IP entre les nœuds de la bulle radio, chaque nœud comprenant une adresse IP ;
ledit jeton de parole ou ledit jeton d'invitation comprenant :
▪ un indicateur de priorité d'un nœud de la bulle radio ; et
▪ un indicateur d'un mode de transmission du jeton de parole parmi un mode bouclé et un mode relayé précisant le cas échéant l'identité du nœud relais.

2. Procédé de découverte selon la revendication 1, **caractérisé en ce que** l'indicateur de priorité définit un seuil minimum de débit au sein de la bulle en limitant le nombre de nœuds dans ladite bulle.

3. Procédé de découverte d'un réseau selon l'une des revendications précédentes, **caractérisé en ce qu'**une taille maximale de fenêtre de temps est déterminée par un nœud dont la priorité est maximale dans une bulle radio.

4. Procédé de découverte selon l'une des revendications précédentes, **caractérisé en ce que** le jeton de découverte ou le jeton de parole comprennent l'identité d'un nœud prioritaire de la bulle radio le cas échéant.

5. Procédé de découverte selon l'une des revendications 1 à 4, **caractérisé en ce qu'**un premier nœud (NOD1) ayant déjà découvert au moins un second nœud (NOD2) et ayant déjà généré une première bulle radio dans une première bande de fréquence et découvrant un troisième nœud (NOD3) détermine en fonction :
• du nombre de nœuds dans la bulle radio et ;
• de la valeur de l'indicateur de priorité des nœuds déjà découverts de ladite bulle radio,
les conditions d'intégration du 3^{ème} nœud parmi lesquelles :
• le troisième nœud (NOD3) intègre la première bulle radio rejoignant les deux autres nœuds (NOD1, NOD2), la première bulle radio comprenant trois nœuds dont les communications sont organisées par la transmission d'un jeton de parole entre lesdits trois nœuds ;
• une nouvelle bulle radio est formée entre le troisième nœud (NOD3) et le premier ou second nœud (NOD1, NOD2), l'un des premier ou second nœud n'étant alors pas intégré dans la nouvelle bulle radio ainsi formée, la première bulle radio étant terminée ;
• le troisième nœud n'est pas invité à intégrer la première bulle radio.

6. Procédé de découverte selon la revendication 5, **caractérisé en ce que** la découverte s'opère par l'émission d'un jeton d'invitation par le premier nœud auquel le troisième nœud répond favorablement dans une fenêtre de temps imparti.

7. Procédé de découverte selon la revendication 5, **caractérisé en ce qu'**au-delà d'un nombre de trois nœuds, la découverte d'un quatrième nœud peut entrainer différents scénarios selon la priorité de chaque nœud dont :
• l'intégration du quatrième nœud (NOD4) dans la bulle radio impliquant la sortie d'un des trois nœuds déjà présents dans ladite bulle radio ;
• l'intégration du quatrième nœud (NOD4) dans la bulle radio impliquant la sortie de deux des trois nœuds déjà présents dans ladite bulle radio ;
• le quatrième nœud (NOD4) n'est pas invité à intégrer la bulle radio.

8. Procédé de découverte selon la revendication 5, **caractérisé en ce que** le premier nœud indique qu'il est un nœud relais dans le jeton d'invitation à partir de l'indicateur de mode de transmission.

9. Procédé de découverte de données selon la revendication 8, **caractérisé en ce que** la pluralité de nœuds comprend un nœud relai (NOD_{R}, NOD6), un premier nœud (NOD5) visible du nœud relai et un deuxième nœud (NOD7) visible du nœud relai (NOD_{R}, NOD6), le premier nœud (NOD5) et le deuxième nœud (NOD7) n'étant pas dans l'horizon radio de l'un et de l'autre et **en ce que** le nœud relai (NOD_{R}, NOD6) est configuré pour déterminer :
▪ si les données reçues du premier nœud visible du nœud relai (NOD5) sont soient relayées au second nœud visible du nœud relai (NOD7), soient traitées par le nœud relai (NOD_{R}, NOD6),
▪ si les données reçues du second nœud visible du nœud relai (NOD7) sont soient relayées au premier nœud visible du nœud relai (NOD5), soient traitées par le nœud relai (NOD_{R}, NOD6).

10. Procédé de découverte selon la revendication 5, **caractérisé en ce que** lorsque le premier nœud détecte un indicateur de priorité maximale du troisième nœud et qu'une nouvelle bulle radio est définie entre le premier et troisième nœud, le second nœud est exclu de ladite bulle radio et la première bulle radio est terminée.

11. Procédé de découverte selon la revendication 1, **caractérisé en ce que** le jeton d'invitation ou le jeton de parole émis par un premier nœud comprend, en outre :
▪ Des données de topologie radio comprenant un ensemble d'identités de nœuds déjà découverts par le premier nœud (NOD1) d'une première bulle radio ;
▪ Des données de topologie d'un réseau IP connue du premier nœud (NOD1) comprenant :
o l'ensemble des sous-réseaux IP connus de chaque nœud de la bulle radio ;
o les adresses IP de chaque nœud connu des nœuds du sous-réseau IP correspondant à la première bulle radio,
o les adresses MAC des routeurs associés à chaque nœud connu.

12. Procédé de découverte selon l'une des revendications 1 à 11, **caractérisé en ce qu'**au moins un nœud (NOD3, NOD6) détermine un indicateur d'un mode de transmission d'un jeton de parole selon la configuration des nœuds découverts imposant l'activation d'un mode bouclé ou l'activation d'un mode relai et, lorsque le mode relai est activé, un choix d'un nœud relai (NOD_{R}, NOD6), ledit indicateur du mode de transmission étant transmis aux autres nœuds (NODi,_{i∈[1 ;N]}) par:
▪ une génération d'un indicateur d'un mode de transmission dans le jeton d'invitation et/ou le jeton de parole ;
▪ une génération d'une identité du prochain nœud devant recevoir le jeton de parole.

13. Procédé de découverte selon l'une quelconque des revendications 1 ou 12, **caractérisé en ce qu'**il comprend :
▪ Un établissement d'une première bulle radio entre trois nœuds, dont au moins un nœud est un nœud relai et les deux autres nœuds étant des nœuds visibles du nœud relai et n'étant pas dans l'horizon radio de l'un et de l'autre, ledit nœud relai relayant par voie radio le jeton de parole selon un sens pour établir une boucle d'émission du jeton de parole entre les trois nœuds de la bulle radio ;
▪ Une réception par un premier nœud visible du nœud relais d'un jeton d'invitation provenant du second nœud visible du nœud relais de la première bulle radio ;
▪ Une émission d'un acquittement par le premier nœud visible du nœud relais recevant l'invitation ;
▪ Une transmission au nœud relai par le second nœud visible du nœud relai d'une nouvelle topologie de la bulle radio dans laquelle chaque nœud est dans l'horizon radio des autre nœuds de la bulle et comportant :
o au moins l'identité du premier nœud visible du nœud relai découvert par le second nœud visible du nœud relai et ;
o un indicateur de mode de transmission désignant le mode bouclé ;
▪ Une suspension du mode relai.

14. Procédé de découverte selon l'une quelconque des revendications 1 à 13, **caractérisé en ce que** la fréquence d'émission du jeton de parole est plus élevée que celle d'émission d'un jeton d'invitation.

15. Procédé de découverte selon la revendication 14, **caractérisé en ce que** la fréquence d'émission du jeton d'invitation au sein d'une bulle radio est configurable par le nœud de plus grande priorité.

16. Procédé d'échange de données entre au moins deux nœuds mobiles d'un réseau IP ad hoc, ledit réseau IP comprenant au moins un premier sous-réseau IP et un deuxième sous-réseau IP , les deux sous-réseaux IP ayant été créés par un procédé de découverte selon l'une des revendications précédentes, connectés par l'intermédiaire d'un nœud connecté à ces deux sous-réseaux IP, dit nœud de jonction, le procédé comprenant :
▪ Un premier échange d'un jeton de parole à tour de rôle au sein d'un ensemble de nœuds formant la première bulle radio correspondant au premier sous-réseau IP et dans lequel les nœuds mobiles sont connus les uns et des autres, chaque nœud comprenant des moyens de transmission radio, dit chaine radio, lui permettant d'échanger des données dans une première bande de fréquence avec au moins un autre nœud de la première bulle radio dans des fenêtres temporelles d'émission coordonnées par la circulation du jeton de parole ;
▪ Un second échange de jeton de parole permettant de coordonner les échanges de données dans une seconde bande de fréquence différente de la première bande de fréquence au sein de la seconde bulle radio correspondant au second sous-réseau IP et comprenant une pluralité de nœuds ;
▪ Un adressage IP d'au moins une trame IP par le nœud du premier sous-réseau IP à destination d'un nœud du second sous-réseau IP grâce à des moyens de routage et un protocole de routage compris dans chaque nœud, ledit nœud ayant connaissance d'une topologie IP du premier sous-réseau IP suite à la mise en œuvre du procédé de découverte, ladite trame IP étant encapsulée dans une trame radio et émise dans la première bulle radio à destination du nœud de jonction;
▪ Une transmission de la trame IP au nœud destinataire du second sous-réseau IP par l'intermédiaire du nœud de jonction, ledit nœud de jonction comprenant :
o l'émission, au moyen d'une seconde chaine radio, de la trame IP encapsulée dans une trame radio vers le nœud destinataire de la seconde bulle radio,
o une association, au moyen d'une table de commutation , d'une identité d'un nœud connu avec une chaine radio du nœud de jonction ;
un jeton de parole comprenant :
▪ un indicateur de priorité d'un nœud de la bulle radio ; et
▪ un indicateur d'un mode de transmission parmi un mode bouclé et un mode relayé précisant le cas échéant l'identité du nœud relais.

17. Contrôleur de données d'un nœud mobile, comprenant
▪ Une à 4 interfaces radio pour transmettre et recevoir des trames radio provenant d'au moins une chaine radio au sein d'une bande de fréquence ;
▪ une mémoire pour stocker :
o des données de topologie d'au moins une bulle radio selon la revendication 1 comportant :
▪ au moins un ensemble d'identités de nœuds communiquant dans ladite bulle grâce à une bande de fréquence allouée ;
▪ un indicateur de priorité dudit nœud, cet indicateur étant propre à chaque interface radio et indiquant le nombre maximum de nœuds avec lequel ladite interface peut former une bulle ;
▪ un indicateur d'un mode de transmission du dit nœud indiquant si la transmission est effectuée en mode bouclé ou en mode relai ;
∘ une table de commutation associant :
▪ des identités de nœuds dans une bulle radio avec des adresses MAC de routeur, chaque nœud étant associé à un routeur ;
▪ des identités de nœuds dans une bulle radio avec un adressage d'au moins une chaine radio ;
▪ un calculateur pour traiter des données de topologie radio en réception comportant des moyens pour :
o l'analyse d'un indicateur de priorité dans les trames radio reçues permettant de modifier si nécessaire la topologie d'au moins une bulle radio;
o l'analyse d'un indicateur d'un mode de transmission permettant de modifier si nécessaire la topologie d'au moins une bulle radio ;
o une génération d'entêtes de trame radio en fonction de données IP reçues et d'une comparaison de ces données avec la table de commutation, les trames radio étant émises vers une chaine radio ;
o un traitement des trames radio reçues pour générer des trames IP vers une interface de sortie ;
o la réception et la génération d'un jeton de parole ;
o la réception et la génération d'un jeton d'invitation périodiquement de sorte à engager un procédé de découverte en cas de réception d'une réponse à une invitation ;
o le traitement des étapes du procédé de découverte des revendications 1 à 14 ;
o le traitement des étapes du procédé d'échange de données de la revendication 16.

18. Système de communication d'un nœud mobile pour l'échange de données IP dans un réseau ad hoc, **caractérisé en ce qu'**il comprend :
▪ Au moins une chaine radio comprenant des moyens pour émettre et recevoir des signaux radiofréquences ;
▪ Au moins un contrôleur selon la revendication 17 ;
▪ Un routeur IP pour traiter des trames IP provenant du contrôleur et déterminer leur acheminement dans le réseau IP.

## Patentansprüche

1. Verfahren zur Erkennung eines Netzwerks zwischen mehreren Mobilknoten, wobei das Verfahren umfasst:
- periodisches Senden eines ersten Funkfrequenzsignals über eine Antenne eines ersten Mobilknotens (NOD1), das einen Einladungs-Datenframe, bezeichnet als Einladungstoken, umfasst, wobei ein Einladungstoken Daten aufweist, die sich auf eine Identität des Knotens (Id_{NOD1}) beziehen, der den Token sendet;
- Erkennen des ersten Signals durch einen zweiten Mobilknoten (NOD2) und Dekodieren des Einladungstokens des ersten Knotens (NOD1);
- Senden eines zweiten Funkfrequenzsignals über eine Antenne des zweiten Knotens (NOD2), das mindestens eine Quittierung des Einladungstokens umfasst, wobei das Senden in einem gesetzten Zeitfenster unmittelbar nach Empfang des Einladungstokens erfolgt;
- Erzeugen einer Funkblase unmittelbar nach dem Empfang mindestens einer Quittierung des Einladungstokens, wobei die Kommunikationen zwischen den Knoten der Funkblase durch das Senden eines Sprachtokens zwischen den Knoten koordiniert wird, wobei die Übertragung des Tokens zwischen den Knoten einer Funkblase eine Sendesequenz zwischen den verschiedenen Knoten definiert, wobei die Funkblase mit einem zwischen den Knoten der Funkblase gemeinsamen Frequenzband verknüpft ist;
- Erstellen eines IP-Subnetzwerks zwischen den Knoten der Funkblase, wobei jeder Knoten eine IP-Adresse umfasst;
wobei der Sprachtoken oder der Einladungstoken umfasst:
- einen Prioritätsindikator eines Knotens der Funkblase; und
- einen Indikator eines Übertragungsmodus des Sprachtokens von einem Loop-Modus und einem Verzögerungs-Modus, der gegebenenfalls die Identität des Relaisknotens präzisiert.

2. Erkennungsverfahren nach Anspruch 1, **dadurch gekennzeichnet, dass** der Prioritätsindikator einen Mindestdurchsatzgrenzwert innerhalb der Blase durch Begrenzung der Anzahl der Knoten in der Blase definiert.

3. Erkennungsverfahren eines Netzwerks nach einem der vorhergehenden Ansprüche, **dadurch gekennzeichnet, dass** eine maximale Zeitfenstergröße von einem Knoten bestimmt wird, dessen Priorität in einer Funkblase maximal ist.

4. Erkennungsverfahren nach einem der vorhergehenden Ansprüche, **dadurch gekennzeichnet, dass** der Erkennungstoken oder der Sprachtoken gegebenenfalls die Identität eines prioritären Knotens der Funkblase umfassen.

5. Erkennungsverfahren nach einem der Ansprüche 1 bis 4, **dadurch gekennzeichnet, dass** ein erster Knoten (NOD1), der bereits mindestens einen zweiten Knoten (NOD2) erkannt hat und bereits eine erste Funkblase in einem ersten Frequenzband erzeugt hat und einen dritten Knoten (NOD3) erkannt hat, bestimmt in Abhängigkeit von:
- der Anzahl der Knoten in der Funkblase und
- dem Wert des Prioritätsindikators der bereits von der Funkblase erkannten Knoten,
die Bedingungen für die Integration des 3. Knotens, wobei:
- der dritte Knoten (NOD3) die erste Funkblase integriert, die sich mit den beiden anderen Knoten (NOD1, NOD2) verbindet, wobei die erste Funkblase drei Knoten umfasst, deren Kommunikationen durch die Übertragung eines Sprachtokens zwischen den drei Knoten organisiert werden;
- zwischen dem dritten Knoten (NOD3) und dem ersten oder zweiten Knoten (NOD1, NOD2) eine neue Funkblase gebildet wird, wobei einer von dem ersten oder zweiten Knoten dann nicht in die derart gebildete Funkblase integriert wird, wobei die erste Funkblase fertiggestellt ist;
- der dritte Knoten nicht aufgefordert wird, die erste Funkblase zu integrieren.

6. Erkennungsverfahren nach Anspruch 5, **dadurch gekennzeichnet, dass** die Erkennung durch Senden eines Einladungstokens durch den ersten Knoten erfolgt, worauf der dritte Knoten innerhalb eines gesetzten Zeitfensters positiv antwortet.

7. Erkennungsverfahren nach Anspruch 5, **dadurch gekennzeichnet, dass** jenseits einer Anzahl von drei Knoten die Erkennung eines vierten Knotens je nach Priorität jedes Knotens zu verschiedenen Szenarien führen kann, darunter:
- Integration des vierten Knotens (NOD4) in die Funkblase, was den Austritt von einem der drei Knoten impliziert, die bereits in der Funkblase vorhanden sind;
- Integration des vierten Knotens (NOD4) in die Funkblase, was den Austritt von zwei der drei Knoten impliziert, die bereits in der Funkblase vorhanden sind;
- keine Aufforderung an den vierten Knoten (NOD4), die Sprachblase zu integrieren.

8. Erkennungsverfahren nach Anspruch 5, **dadurch gekennzeichnet, dass** der erste Knoten anzeigt, dass er ausgehend vom Übertragungsmodus-Indikator ein Relaisknoten im Einladungstoken ist.

9. Datenerkennungsverfahren nach Anspruch 8, **dadurch gekennzeichnet, dass** die Vielzahl von Knoten einen Relaisknoten (NOD_{R}, NOD6), einen sichtbaren ersten Knoten (NOD5) des Relaisknotens und einen sichtbaren zweiten Knoten (NOD7) des Relaisknotens (NOD_{R}, NOD6) umfasst, wobei der erste Knoten (NOD5) und der zweite Knoten (NOD7) nicht im Funkhorizont des jeweils anderen liegen und dass der Relaisknoten (NOD_{R}, NOD6) ausgelegt ist, um zu bestimmen:
- ob die vom ersten sichtbaren Knoten des Relaisknotens (NOD5) empfangenen Daten entweder an den zweiten sichtbaren Knoten des Relaisknotens (NOD7) weitergeleitet oder vom Relaisknoten (NOD_{R}, NOD6) verarbeitet werden,
- ob die vom zweiten sichtbaren Knoten des Relaisknotens (NOD7) empfangenen Daten entweder an den ersten sichtbaren Knoten des Relaisknotens (NOD5) weitergeleitet oder vom Relaisknoten (NOD_{R}, NOD6) verarbeitet werden.

10. Erkennungsverfahren nach Anspruch 5, **dadurch gekennzeichnet, dass**, wenn der erste Knoten einen Indikator höchster Priorität des dritten Knotens ermittelt und eine neue Funkblase zwischen dem ersten und dritten Knoten definiert wird, der zweite Knoten von der Funkblase ausgeschlossen wird und die erste Funkblase fertiggestellt ist.

11. Erkennungsverfahren nach Anspruch 1, **dadurch gekennzeichnet, dass** der Einladungstoken oder der Sprachtoken, der von einem ersten Knoten gesendet wird, ferner umfasst:
- Daten zur Funktopologie, die eine Gesamtheit von Identitäten von Knoten umfassen, die bereits vom ersten Knoten (NOD1) einer ersten Funkblase erkannt wurden;
- Topologiedaten eines IP-Netzwerks, das dem ersten Knoten (NOD1) bekannt ist, umfassend:
o die Gesamtheit der IP-Subnetzwerke, die jedem Knoten der Funkblase bekannt sind;
o die IP-Adressen jedes Knotens, der den Knoten des IP-Subnetzwerks bekannt ist, das der ersten Funkblase entspricht,
o die MAC-Adressen der Router, die mit jedem bekannten Knoten verknüpft sind.

12. Erkennungsverfahren nach einem der Ansprüche 1 bis 11, **dadurch gekennzeichnet, dass** mindestens ein Knoten (NOD3, NOD6) einen Indikator für einen Übertragungsmodus eines Sprachtokens gemäß der Konfiguration der erkannten Knoten bestimmt, die die Aktivierung eines Loop-Modus oder die Aktivierung eines Relais-Modus vorschreibt, und, wenn der Relais-Modus aktiviert ist, eine Auswahl eines Relaisknotens (NOD_{R}, NOD6), wobei der Indikator des Übertragungsmodus an die anderen Knoten (NODi,_{i∈[1 ;N]}) übertragen wird durch:
- eine Generierung eines Indikators eines Übertragungsmodus im Einladungstoken und/oder Sprachtoken;
- eine Generierung einer Identität des nächsten Knotens, der den Sprachtoken erhalten soll.

13. Erkennungsverfahren nach einem der Ansprüche 1 oder 12, **dadurch gekennzeichnet, dass** es umfasst:
- eine Einrichtung einer ersten Funkblase zwischen drei Knoten, von denen mindestens ein Knoten ein Relais-Knoten ist und die beiden anderen Knoten sichtbare Knoten des Relais-Knotens sind und nicht im Funkhorizont von beiden liegen, wobei der Relais-Knoten über Funk den Sprachtoken in einer Richtung weiterleitet, um eine Sendeschleife des Sprachtokens zwischen den drei Knoten der Funkblase herzustellen;
- einen Empfang eines Einladungstokens von einem ersten sichtbaren Knoten des Relaisknotens, der vom zweiten sichtbaren Knoten des Relaisknotens der ersten Funkblase kommt;
- eine Sendung einer Quittierung durch den ersten sichtbaren Knoten des Relaisknotens, der die Einladung empfängt;
- eine Übertragung an den Relaisknoten durch den zweiten sichtbaren Knoten des Relaisknotens einer neuen Topologie der Funkblase, in der jeder Knoten im Funkhorizont der anderen Knoten der Blase ist und aufweist:
o mindestens die Identität des ersten sichtbaren Knotens des Relaisknotens, der von dem zweiten sichtbaren Knoten des Relaisknotens erkannt wurde, und
o einen Indikator des Übertragungsmodus, der den Loop-Modus anzeigt;
- eine Aussetzung des Relaismodus.

14. Erkennungsverfahren nach einem der Ansprüche 1 bis 13, **dadurch gekennzeichnet, dass** die Sendefrequenz des Sprachtokens höher als die Sendefrequenz eines Einladungstokens ist.

15. Erkennungsverfahren nach Anspruch 14, **dadurch gekennzeichnet, dass** die Sendefrequenz des Einladungstokens innerhalb einer Funkblase durch den Knoten mit höherer Priorität konfigurierbar ist.

16. Verfahren zum Datenaustausch zwischen mindestens zwei Mobilknoten eines Ad-hoc-IP-Netzwerks, wobei das IP-Netzwerk mindestens ein erstes IP-Subnetzwerk und ein zweites IP-Subnetzwerk umfasst, wobei zwei IP-Subnetzwerke durch ein Erkennungsverfahren nach einem der vorhergehenden Ansprüche geschaffen wurden, die über einen mit diesen beiden IP-Subnetzwerken verbundenen Knoten, den sogenannten Verbindungsknoten, verbunden sind, wobei das Verfahren umfasst:
- einen ersten Austausch eines Sprachtokens nacheinander innerhalb einer Gesamtheit von Knoten, die die erste Funkblase bilden, die dem ersten IP-Subnetzwerk entspricht und in dem die Mobilknoten einander bekannt sind, wobei jeder Knoten Funkübertragungsmittel, bezeichnet als Funkkette, umfasst, die es ihm erlauben, Daten in einem ersten Frequenzband mit mindestens einem anderen Knoten der ersten Funkblase in temporären Sendefenstern auszutauschen, die von der Zirkulation des Sprachtokens koordiniert werden;
- einen zweiten Austausch eines Sprachtokens, der die Koordinierung des Datenaustauschs in einem zweiten Frequenzband gestattet, das sich vom ersten Frequenzband unterscheidet, innerhalb der zweiten Funkblase, die dem zweiten IP-Subnetzwerk entspricht und eine Vielzahl von Knoten umfasst;
- eine IP-Adressierung von mindestens einem IP-Frame durch den Knoten des ersten IP-Subnetzwerks zu einem Knoten des zweiten IP-Subnetzwerks mithilfe von Routing-Mitteln und eines Routing-Protokolls, das in jedem Knoten enthalten ist, wobei der Knoten Kenntnis über eine IP-Topologie des ersten IP-Subnetzwerks infolge der Durchführung des Erkennungsverfahrens hat, wobei der IP-Frame in einem Funkframe gekapselt ist und in der ersten Funkblase an den Verbindungsknoten gesendet wird;
- eine Übertragung des IP-Frames an den Empfängerknoten des zweiten IP-Subnetzwerks über den Verbindungsknoten, wobei der Verbindungsknoten umfasst:
o das Senden des in einem Funkframe gekapselten IP-Frames mittels einer zweiten Funkkette an den Empfängerknoten der zweiten Funkblase;
o ein Verknüpfen einer Identität eines bekannten Knotens mit einer Funkkette des Verbindungsknotens mittels einer Schalttabelle;
einen Sprachtoken, der umfasst:
- einen Prioritätsindikator eines Knotens der Funkblase; und
- ein Indikator für einen aus einem Loop-Modus und einem Verzögerungs-Modus ausgewählten Übertragungsmodus, der gegebenenfalls die Identität des Relaisknotens präzisiert.

17. Datencontroller eines Mobilknotens, umfassend
- eine bis vier Funkschnittstellen zum Übertragen und Empfangen von Funkframes von mindestens einer Funkkette innerhalb eines Frequenzbandes;
- einen Speicher, um zu speichern:
o Topologiedaten mindestens einer Funkblase nach Anspruch 1 aufweisend:
▪ mindestens eine Gesamtheit von Identitäten von Knoten, die in der Blase über ein zugewiesenes Frequenzband kommunizieren;
▪ einen Prioritätsindikator des Knotens, wobei dieser Indikator für jede Funkschnittstelle spezifisch ist und die maximale Anzahl der Knoten angibt, mit denen die Funkschnittstelle eine Blase bilden kann;
▪ einen Indikator eines Übertragungsmodus des Knotens, der angibt, ob die Übertragung im Loop-Modus oder im Relais-Modus erfolgt;
o eine Schalttabelle, die verknüpft:
▪ Identitäten von Knoten in einer Funkblase mit MAC-Routeradressen, wobei jeder Knoten mit einem Router verknüpft ist;
▪ Identitäten von Knoten in einer Funkblase mit einer Adressierung von mindestens einer Funkkette;
- einen Rechner zur Verarbeitung von empfangenen Funktopologiedaten, der Mittel aufweist für:
o die Analyse eines Prioritätsindikators in den empfangenen Funkframes, was ermöglicht, die Topologie mindestens einer Funkblase zu ändern, sofern notwendig;
o die Analyse eines Indikators eines Übertragungsmodus, was ermöglicht, die Topologie mindestens einer Funkblasen zu ändern, sofern notwendig;
o eine Generierung von Funkframekopfzeilen in Abhängigkeit von empfangenen IP-Daten und eines Vergleichs dieser Daten mit der Schalttabelle, wobei die Funkframes an eine Funkkette gesendet werden;
o eine Verarbeitung der empfangenen Funkframes zur Erzeugung von IP-Frames zu einer Ausgangsschnittstelle
o das Empfangen und das Erzeugen eines Sprachtokens;
o das periodische Empfangen und Erzeugen eines Einladungstokens, so dass bei Erhalt einer Antwort auf eine Einladung ein Erkennungsverfahren eingeleitet wird;
o das Verarbeiten der Schritte des Erkennungsverfahrens der Ansprüche 1 bis 14;
o das Verarbeiten der Schritte des Datenaustauschverfahrens von Anspruch 16.

18. Kommunikationssystem eines Mobilknotens für den Austausch von IP-Daten in einem Ad-hoc-Netzwerk, **dadurch gekennzeichnet, dass** es umfasst:
- mindestens eine Funkkette, die Mittel zum Senden und Empfangen von Funkfrequenzsignalen umfasst;
- mindestens einen Controller nach Anspruch 17;
- einen IP-Router zur Verarbeitung der IP-Frames vom Controller und zur Bestimmung ihrer Beförderung im IP-Netzwerk.

## Claims

1. Method for discovering a network among a plurality of mobile nodes, **characterised in that** it includes:
▪ Periodically emitting by an antenna of a first mobile node (NOD1) a first radiofrequency signal including an invitation data frame, referred to as invitation token, an invitation token comprising data relating to an identity of the node (Id_{NOD1}) which transmits said token;
▪ Detecting the first signal by a second mobile node (NOD2) and decoding the invitation token of the first node (NOD1);
▪ Transmitting by an antenna of the second node (NOD2) a second radiofrequency signal including at least one acknowledgement of the invitation token, said transmission being carried out in an assigned time window subsequent to the reception of the invitation token;
▪ Creating a radio bubble subsequent to the reception of at least acknowledgement of the invitation token, said communications between the nodes of the radio bubble being coordinated by the transmission of a speech token between said nodes, the transmission of said token between the nodes of a radio bubble defining a transmission sequence between the different nodes;
▪ Creating an IP sub-network between the nodes of the radio bubble, each node including an IP address;
the speech token or the invitation token including:
▪ a priority indicator of a node of the radio bubble ; and
▪ an indicator of a transmission mode of the speech token among a looped mode and a relayed mode specifying if need be the identity of the relay node.

2. Method for discovering according to claim 1, **characterised in that** a radio bubble is associated with a frequency channel shared between the nodes of said radio bubble.

3. Method for discovering a network according to claim 1, **characterised in that** a maximum size of time window is determined by a node of which the priority is maximum in a radio bubble.

4. Method for discovering according to one of the preceding claims, **characterised in that** the discovery token and/or the speech token include(s) if needed the identity of a priority node of the radio bubble.

5. Method for discovering according to one of claims 1 to 4, **characterised in that** a first node (NOD1) having already discovered at least one second node (NOD2) and having already generated a first radio bubble in a first frequency channel and discovering a third node (NOD3) determines, as a function of:
• the number of nodes in the radio bubble and;
• the value of the priority indicator of the already discovered nodes of said radio bubble,
the integration conditions of the 3^{rd} node among which:
• the third node (NOD3) integrates the first radio bubble joining the two other nodes (NOD1, NOD2), the first radio bubble including three nodes of which the communications are organised by the transmission of a speech token between said three nodes;
• a new radio bubble is formed between the third node (NOD3) and the first or second node (NOD1, NOD2), one of the first or second nodes not then being integrated in the new radio bubble thereby formed, the first radio bubble being terminated;
• the third node is not invited to integrate the first radio bubble.

6. Method for discovering according to claim 5, **characterised in that** the discovery operates by the transmission of an invitation token by the first node to which the third node responds favourably in an assigned time window.

7. Method for discovering according to claim 5, **characterised in that** beyond a number of three nodes, the discovery of a fourth node can lead to different scenarios according to the priority of each node of which:
• the integration of the fourth node (NOD4) in the radio bubble involving the exiting of one of the three nodes already present in said radio bubble;
• the integration of the fourth node (NOD4) in the radio bubble involving the exiting of two of the three nodes already present in said radio bubble;
• the fourth node (NOD4) is not invited to integrate the radio bubble.

8. Method for discovering according to claim 6, **characterised in that** the first node indicates that it is a relay node in the invitation token from the indicator of transmission mode.

9. Method for discovering data according to claim 9, **characterised in that** the plurality of nodes includes a relay node (NOD_{R}, NOD6), a first node visible to the relay node (NOD5) and a second node visible to the relay node (NOD7), the first node (NOD5) and the second node (NOD7) not being within the radio horizon of each other, and **in that** a relay node (NOD_{R}, NOD6) is configured to determine:
▪ if the data received from the first node visible to the relay node (NOD5) are either relayed to the second node visible to the relay node (NOD7), or processed by the relay node (NOD_{R}, NOD6);
▪ if the data received from the second node visible to the relay node (NOD7) are either relayed to the first node visible to the relay node (NOD5), or processed by the relay node (NOD_{R}, NOD6)the two nodes visible to the relay node not being within the radio horizon of each other.

10. Method for discovering according to claim 5, **characterised in that** when the first node detects a maximum priority indicator of the third node and when a new radio bubble is defined between the first and third node, the second node is excluded from said radio bubble and the first radio bubble is terminated.

11. Method for discovering according to claim 1, **characterised in that** the invitation token or the speech token transmitted by a first node further includes:
▪ Radio topology data including a set of identities of nodes already discovered by the first node (NOD1) of a first radio bubble;
▪ Topology data of a known IP network of the first node (NOD1) including:
o the set of known IP sub-networks of each node of the radio bubble;
o the IP addresses of each known node of the nodes of the IP sub-network corresponding to the first radio bubble;
o the MAC addresses of the routers associated with each known node.

12. Method for discovering according to one of claims 1 to 11, **characterised in that** at least one node (NOD3, NOD6) determines an indicator of a transmission mode of a speech token according to the configuration of the nodes discovered imposing the activation of a looped mode or the activation of a relayed mode and, when the relay mode is activated, a choice of a relay node (NODR, NOD6), said indicator of the transmission mode being transmitted to the other nodes (NOD_{i,iε[1;N]}) by:
▪ a generation of an indicator of a transmission mode in the invitation token and/or the speech token;
▪ a generation of an identity of the next node having to receive the speech token.

13. Method for discovering according to any of claims 2 or 12, **characterised in that** it includes:
▪ An establishment of a first radio bubble between three nodes, of which at least one node is a relay node and the two other nodes being nodes visible to the relay node and not being in the radio horizon of each other, said relay node relaying by radio channel the speech token along one direction to establish a transmission loop of the speech token between the three nodes of the radio bubble;
▪ A reception by a first node visible to the relay node of an invitation token coming from the second node visible to the relay node of the first radio bubble;
▪ A transmission of an acknowledgement by the first visible node of the relay node receiving the invitation;
▪ A transmission to the relay node by the second node visible to the relay node of a new topology of the radio bubble in which each node is within the radio horizon of the other nodes of the radio bubble and comprising:
o at least the identity of the first node visible to the relay node discovered by the second node visible to the relay node and;
o an indicator of transmission mode designating the looped mode;
▪ A suspension of the relay mode.

14. Method for discovering according to any of claims 1 to 13, **characterised in that** the transmission frequency of the speech token is higher than that of transmission of an invitation token.

15. Method for discovering according to claim 14, **characterised in that** the transmission frequency of the invitation token within a radio bubble is configurable by the node of highest priority.

16. Method for exchanging data between at least two mobile nodes of an ad hoc IP network, said IP network including at least two IP sub-networks, the two IP sub-network having been creates by a method for discovering according to one of the preceding claims, connected through a node connected to these two IP sub-networks, referred to as junction node, **characterised in that** it includes:
▪ A first exchange of a speech token in turn within a set of nodes forming the first radio bubble corresponding to a first IP sub-network and in which the mobile nodes are known to each other, each node including radio transmission means, referred to as radio chain, enabling it to exchange data in a first frequency band with at least one other node of the first radio bubble in transmission time windows coordinated by the circulation of the speech token;
▪ A second exchange of speech token making it possible to coordinate data exchanges within a second frequency band different from the first frequency band in the second radio bubble corresponding to a second IP sub-network and including a plurality of nodes;
▪ An IP addressing of at least one IP frame by a node of the first IP sub-network destined for a node of the second IP sub-network thanks to routing means and a routing protocol comprised in each node, said node having knowledge of an IP topology of the first IP sub-network, said IP frame being encapsulated in a radio frame and transmitted in the first radio bubble destined for the junction node;
▪ A transmission of the IP frame to the destination node of the second IP sub-network through the junction node, said junction node including:
∘ emitting, using a second radio chain, the IP frame encapsulated in a radio frame to the destination node of the second radio bubble,
∘ associating, using a switching table, an identity of a known node with a radio chain of the junction node;
a speech token including :
▪ a priority indicator of a node of the radio bubble ; and
▪ an indicator of a transmission mode among a looped mode and a relayed mode specifying if need be the identity of the relay node.

17. Controller of data of a mobile node comprising:
▪ One to 4 radio interfaces for transmitting and receiving radio frames coming from at least one radio chain within a frequency channel;
▪ a memory for storing:
∘ topology data of at least one radio bubble according to claim 1 comprising:
▪ at least one set of identities of nodes communicating in said bubble thanks to an allocated frequency band;
▪ a priority indicator of said node, this indicator being specific to each radio interface and indicating the maximum number of nodes with which said radio interface can from a radio bubble;
▪ an indicator of a transmission mode of said node indicating if the transmission is in relay or looped mode;
∘ a switching table associating:
▪ identities of nodes in a radio bubble with router MAC addresses, each node being associated with a router;
▪ identities of nodes in a radio bubble with an addressing of at least one radio chain;
▪ a calculator for processing radio topology data in reception comprising means for:
∘ analysing of a priority indicator in the radio frames received making it possible to modify if necessary the topology of at least one radio bubble;
∘ analysing of an indicator of a transmission mode making it possible to modify if necessary the topology of at least one radio bubble;
∘ generating of radio frame headers as a function of IP data received and comparing these data with the switching table, the radio frames being transmitted to a radio chain;
∘ processing the radio frames received to generate IP frames to an output interface;
**∘** receiving and generating a speech token;
**∘** receiving and generating an invitation token periodically so as to engage a method for discovering in the event of reception of a response to an invitation;
∘ processing the steps of the method for discovering of claims 1 to 14;
∘ processing the steps of the method for exchanging data of claim 16.
∘ receiving and generating a speech token;
∘ processing the steps of the method for discovering of claims 1 to 16.

18. Communication system of a mobile node for the exchange of IP data in an ad hoc network, **characterised in that** it includes:
▪ At least one radio chain including means for transmitting and receiving radiofrequency signals;
▪ At least one controller according to claim 17;
▪ An IP router for processing IP frames coming from the controller and determining their routing in the IP network.
